# EUROPEAN PATENT APPLICATION

(11) **EP 4 556 117 A1**
(43) Date of publication of application: **21.05.2025**
(21) Application number: 23860229.6
(22) Date of filing: 25.08.2023
(51) Int. Cl.: B01J 29/78, B01D 53/86, B01D 53/94, B01J 29/24, B01J 29/46, B01J 29/76

(54) **AMMONIA DECOMPOSITION CATALYST AND EXHAUST GAS TREATMENT METHOD**

(30) Priority: 29.08.2022 JP 2022136258
(71) Applicant: Mitsubishi Heavy Industries, Ltd., Tokyo 100-8332 (JP)
(72) Inventor: KANEDA Shimpei, Tokyo 100-8332 (JP); MASUDA Tomotsugu, Tokyo 100-8332 (JP); KAI Keiichiro, Tokyo 100-8332 (JP)
(74) Representative: Studio Torta S.p.A.
(86) International application number: PCT/JP2023/030794
(87) International publication number: WO 2024/048467

(57) **Abstract**

Provided are: a catalyst for promoting an ammonia decomposition reaction, which comprises a mixture of a first catalyst powder comprising at least one support selected from the group consisting of silica, titania and others and a noble metal supported on the support and a second catalyst powder comprising a product produced by the ion exchange of at least one ion selected from the group consisting of a Fe ion and others into zeolite; and a method for reducing poisonous gas components to be treated, the method comprising performing a chemical reaction for converting NH₃ contained in the gas into nitrogen and water and a chemical reaction for converting NO_{X} and N₂O contained in the gas into nitrogen and water in the presence of the catalyst.

## Description

### Technical Field

The present invention relates to a catalyst for promoting an ammonia decomposition reaction and a method for reducing poisonous gas components to be treated. More specifically, the present invention relates to: a catalyst for promoting an ammonia decomposition reaction, which can promote a chemical reaction in which ammonia (NH₃) is decomposed with high efficiency, can also promote a chemical reaction in which NOₓ and/or N₂O generated as by-products by an NH₃ oxidation reaction are decomposed with high efficiency, hardly deteriorates by SO₂ which may be contained in a combustion exhaust gas or the like, and has excellent high temperature resistance; and a method for reducing poisonous gas components to be treated, which can decompose NH₃ contained in the gas to be treated with high efficiency and can also decompose NOₓ and/or N₂O contained in the gas to be treated, generated as by-products by an NH₃ oxidation reaction, with high efficiency.

### Background of the Invention

Carbon dioxide is referred to as the greenhouse gas. Therefore, ammonia fuel that does not emit carbon dioxide during combustion has been studied. In a case where ammonia fuel is burned, an exhaust gas containing NH₃, NOₓ, and N₂O is generated. The exhaust gas may have a negative impact on the environment.

In addition, in the fields where ammonia is stored and used, such as ammonia fuel ships, ammonia transport ships, ammonia fuel storage bases, ammonia tanks for a denitration apparatus in a power plant, and ammonia cooling/refrigerating apparatuses, for example, large amounts of ammonia are emitted when tanks or pipes are purged with nitrogen or the like. In the treatments for ammonia-containing wastewater such as wastewater from food/beverage manufacturing, chemical factory wastewater, plating wastewater, wastewater from semiconductor component manufacturing, and domestic wastewater, for example, large amounts of ammonia are emitted in a stripping tower or the like. Ammonia is a malodorous substance which causes mucous membrane irritation, respiratory irritation, conjunctival edema, corrosion, and the like.

Various catalysts or methods have been proposed to detoxify a gas containing NH₃ and the like.

For example, PTL 1 discloses an ammonia decomposition catalyst for treating an ammonia exhaust gas containing moisture, including a lower layer having a noble metal, an inorganic oxide, phosphorus, and a first proton type zeolite or a first ionexchange type zeolite ion-exchanged with Cu, Co, or Fe ions, and an upper layer provided on the lower layer and having a second proton type zeolite or a second ionexchange type zeolite ion-exchanged with Cu, Co, or Fe ions. For the ammonia decomposition catalyst disclosed in detail in Examples in PTL 1, a mixture of platinum-carrying titania and a Cu ion-exchanged beta type zeolite is applied to a support, and dried and sintered to obtain a lower layer, a phosphoric acid aqueous solution is applied to the lower layer, and then a mixture of a silica sol and a Cu ion-exchanged beta type zeolite is applied to obtain an upper layer.

PTL 2 discloses a catalyst which has, as a first component, zeolite carrying iron, and as a second component, noble metal salts of platinum or palladium or compositions of the noble metals carried in advance by a porous body such as zeolite, alumina, or silica, and has carbon monoxide decomposition activity, ammonia decomposition activity, nitrous oxide decomposition activity, and nitric oxide decomposition activity. As the first component disclosed in detail in Examples in PTL 2, a mordenite or pentasil type zeolite is used.

PTL 3 discloses a method of manufacturing a catalyzed particulate filter, including: a) a step of providing a porous filter structure having a dispersion side and a transmission side; b) a step of providing a catalyst washcoat containing particles of a first catalyst composition active in selective catalytic reduction of a nitrogen oxide, particles of a second catalyst composition active in oxidation of carbon monoxide, hydrocarbon, and ammonia, and a third catalyst particle composition active in selective oxidation of ammonia to nitrogen in combination with the second catalyst composition, in which the particles of the first catalyst composition have a modal particle size smaller than an average pore size of the particulate filter, and the second and third catalyst compositions have a modal particle size larger than the average pore size of the particulate filter; c) a step of introducing the washcoat into an outlet end on the transmission side to coat the filter structure with the catalyst washcoat; and d) a step of drying and heat-treating the coated filter structure to obtain a catalyzed particulate filter.

PTLs 4 and 5 disclose a catalyst containing an oxide of titanium (Ti), an oxide of one or more elements selected from tungsten (W), vanadium (V), and molybdenum (Mo), and a silica, zeolite, and/or alumina carrying one or more noble metals selected from platinum (Pt), iridium (Ir), rhodium (Rh), and palladium (Pd).

PTL 6 discloses a catalyst for removing a nitrogen oxide, containing a catalyst component obtained by calcinating a precipitate obtained by subjecting an aqueous solution containing a soluble titanium compound, a soluble tungsten compound, and a soluble cerium compound in an aqueous medium to precipitation.

PTL 7 discloses a catalyst for reducing and removing a nitrous oxide in an exhaust gas using ammonia, in which iron is carried on a β type zeolite.

PTL 8 discloses an ammonia oxidation catalyst device including a substrate, a first catalyst coating layer, and a second catalyst coating layer, in which the first catalyst coating layer includes inorganic oxide particles and a catalyst noble metal carried on the inorganic oxide particles, and the second catalyst coating layer includes an NOₓ selective reduction catalyst and a proton zeolite. In the ammonia oxidation catalyst device disclosed in detail in Examples in PTL 8, the first catalyst coating layer is formed of platinum-carrying alumina, and the second catalyst coating layer is formed of ferrovanadium and a BEA-type zeolite.

PTL 9 discloses an exhaust treatment system for a lean burn engine, including a diesel oxidation catalyst (DOC), a catalyzed soot filter (CSF), a first reductant injector, an AEI zeolite-based selective catalytic reduction (SCR) catalyst, and a first ammonia oxidation catalyst (AMO_{X}) lying downstream of the AEI zeolite-based SCR catalyst, in which the AEI zeolite has a molar ratio of silica to alumina of 10 to 19, and preferably 14 to 18.

### Citation List

### Patent Literature

[PTL 1] WO2015/099024A1
[PTL 2] Japanese Unexamined Patent Application Publication No. 9-884
[PTL 3] Japanese Unexamined Patent Application Publication No. 2014-508631
[PTL 4] Japanese Unexamined Patent Application Publication No. 2004-216300
[PTL 5] Japanese Unexamined Patent Application Publication No. 2002-66538
[PTL 6] Japanese Unexamined Patent Application Publication No. 8-257402
[PTL 7] Japanese Unexamined Patent Application Publication No. 8-57262
[PTL 8] Japanese Unexamined Patent Application Publication No. 2020-182898
[PTL 9] Japanese Unexamined Patent Application Publication No. 2022-515962

### Summary of Invention

### Problem to be solved by the Invention

An object of the present invention is to provide: a catalyst for promoting an ammonia decomposition reaction, which can promote a chemical reaction in which ammonia (NH₃) is decomposed with high efficiency, can also promote a chemical reaction in which NO_{X} and/or N₂O generated as by-products by an NH₃ oxidation reaction are decomposed with high efficiency, hardly deteriorates by SO₂ which may be contained in a combustion exhaust gas or the like, and has excellent high temperature resistance; and a method for reducing poisonous gas components to be treated, which can decompose NH₃ contained in the gas to be treated with high efficiency and can also decompose NO_{X} and/or N₂O contained in the gas to be treated, generated as by-products by an NH₃ oxidation reaction, with high efficiency.

### Solution to Problem

[1] A catalyst for promoting an ammonia decomposition reaction, including: a mixture of
   a first catalyst powder including a catalyst support containing at least one selected from the group consisting of ceria, silica, alumina, titania, zirconia, and zeolite and a noble metal carried on the catalyst support, and
   a second catalyst powder including a product obtained by ion exchange of at least one ion selected from the group consisting of Fe ions, Ce ions, Co ions, and Cu ions with zeolite.
[2] The catalyst according to [1],
   in which the first catalyst powder includes a catalyst support containing silica and/or titania, and platinum and/or iridium carried on the catalyst support, and
   the second catalyst powder includes a product obtained by ion exchange of Fe ions with BEA-type zeolite.
[3] A catalyst for promoting an ammonia decomposition reaction, including: a mixture of
   a first catalyst powder including a catalyst support containing at least one selected from the group consisting of ceria, silica, alumina, titania, zirconia, and zeolite and a noble metal carried on the catalyst support,
   a second catalyst powder including a product obtained by ion exchange of at least one ion selected from the group consisting of Fe ions, Ce ions, Co ions, and Cu ions with zeolite, and
   a third catalyst powder including an oxide of titanium, an oxide of tungsten and/or molybdenum, and an oxide of cerium and/or vanadium.
[4] The catalyst according to [3],
   in which the first catalyst powder includes a catalyst support containing silica and/or titania, and platinum and/or iridium carried on the catalyst support,
   the second catalyst powder includes a product obtained by ion exchange of Fe ions with BEA-type zeolite, and
   the third catalyst powder includes an oxide of titanium, an oxide of tungsten, and an oxide of cerium.
[5] The catalyst according to any one of [1] to [4], in which an amount of the noble metal included is 0.05 to 200 ppm.
[6] The catalyst according to any one of [1] to [5], in which an amount of the second catalyst powder is 1 to 100 parts by mass per 1 part by mass of the first catalyst powder.
[7] A catalyst structure for promoting an ammonia decomposition reaction, including a support, and the catalyst according to any one of [1] to [6] carried on the support.
[8] A catalyst structure for promoting an ammonia decomposition reaction, including a molded structure including the catalyst according to any one of [1] to [6].
[9] A method for to be treated, including: performing, in a presence of the catalyst according to any one of [1] to [6] or the catalyst structure according to any one of [7] and [8], a chemical reaction in which NH₃ contained in the gas to be treated is converted into nitrogen and water, and a chemical reaction in which NO_{X} and N₂O contained in the gas to be treated are converted into nitrogen and water.
[10] The method according to [9], further including: adding at least one reducing agent selected from the group consisting of ammonia and urea to the gas to be treated.
[11] The method according to [10], further including: adjusting an amount of the reducing agent to be added to the gas to be treated on a basis of a temperature of a treated gas and amounts of NO_{X} and N₂O contained in the treated gas.
[12] The method according to any one of [9] to [11], further including: cooling the gas to be treated.
[13] The method according to [12], further including: adjusting a degree of cooling the gas to be treated on a basis of a temperature of a treated gas.
[14] The method according to [12] or [13], in which the gas to be treated is cooled by adding air to the gas to be treated.

### Advantageous Effects of Invention

A catalyst according to the present invention can promote a chemical reaction in which ammonia (NH₃) is decomposed with high efficiency, can also promote a decomposition reaction of NO_{X} and/or N₂O generated as by-products by an NH₃ oxidation reaction with high efficiency, hardly deteriorates by SO₂ which may be contained in a combustion exhaust gas or the like, and has excellent high temperature resistance. The catalyst according to the present invention is suitable for a chemical reaction for detoxifying an exhaust gas containing NH₃ and the like.

In the method according to the present invention, it is possible to decompose NH₃ contained in a gas to be treated with high efficiency and also decompose NO_{X} and/or N₂O contained in the gas to be treated, generated as by-products by an NH₃ oxidation reaction, with high efficiency. The method according to the present invention is suitable for detoxifying an exhaust gas containing NH₃ and the like.

The chemical reaction (direct ammonia decomposition reaction) in which NH₃ can be changed into nitrogen and water is represented by Expression (4).

4NH₃ + 3O₂ -> 2N₂ + 6H₂O (4)

This chemical reaction is accompanied by heat generation. In a case where large amounts of ammonia and oxygen are supplied to a catalyst layer, a chemical reaction proceeds excessively, hot spots are generated in the catalyst layer, and the catalyst may thermally deteriorate.

The catalyst according to the present invention promotes a direct ammonia decomposition reaction. In particular, the catalyst according to the present invention described in [3] promotes a direct ammonia decomposition reaction without thermal deterioration even at a high temperature of 500°C or higher.

The chemical reaction (NO_{X} decomposition reaction) in which NO_{X} can be changed into nitrogen and water is represented by Expressions (6), (7), and (8).

4NO +4NH₃ +O₂ -> 4N₂ + 6H₂O (6)

6NO₂ + 8NH₃ -> 7N₂ + 12H₂O (7)

NO + NO₂ + 2NH₃ -> 2N₂ + 3H₂O (8)

The chemical reaction (N₂O decomposition reaction) in which N₂O can be changed into nitrogen and water is represented by Expression (9).

3N₂O + 2NH₃ -> 4N₂ + 3H₂O (9)

The catalyst according to the present invention also promotes a NO_{X} decomposition reaction and a N₂O decomposition reaction.

Chemical reactions (side reactions) represented by Expressions (1), (2), and (3) may proceed in parallel with the chemical reaction represented by Expression (4).

4NH₃ + 5O₂ -> 4NO + 6H₂O (1)

4NH₃ + 7O₂ -> 4NO₂ + 6H₂O (2)

2NH₃ + 2O₂ -> N₂O + 3H₂O (3)

NO_{X} and N₂O generated by these side reactions are harmful substances affecting the environment and the like. As described above, the catalyst according to the present invention promotes the NO_{X} decomposition reaction and the N₂O decomposition reaction, and as a result, the catalyst according to the present invention promotes a chemical reaction (indirect ammonia decomposition reaction) in which NH₃ can be changed into nitrogen and water via an intermediate (NO_{X} and N₂O).

### Brief Description of Drawings

Fig. 1 is a diagram showing changes in NH₃ concentration at a reactor outlet at 550°C.
Fig. 2 is a diagram showing changes in NO_{X} concentration at a reactor outlet at 550°C.
Fig. 3 is a diagram showing changes in N₂O concentration at a reactor outlet at 550°C.
Fig. 4 is a diagram comparing NH₃ concentrations at a reactor outlet at 550°C.
Fig. 5 is a diagram comparing NO_{X} concentrations at a reactor outlet at 550°C.
Fig. 6 is a diagram comparing N₂O concentrations at a reactor outlet at 550°C.
Fig. 7 is a diagram showing temperature dependence of an NH₃ decomposition rate.
Fig. 8 is an enlarged view of a main part in Fig. 7.
Fig. 9 is a diagram showing temperature dependence of an NO_{X} decomposition rate (denitration rate).
Fig. 10 is a diagram showing temperature dependence of an N₂O concentration at a reactor outlet.
Fig. 11 is a diagram comparing NH₃ decomposition rates.
Fig. 12 is a diagram comparing denitration rates.
Fig. 13 is a diagram comparing N₂O concentrations at a reactor outlet.
Fig. 14 is a diagram showing an example of a device for detoxifying an NH₃-containing gas at a high temperature.
Fig. 15 is a diagram showing an example of a device for detoxifying an NH₃-containing gas at a low temperature.
Fig. 16 is a diagram showing an example of a device for detoxifying an NH₃-containing gas at a high temperature.
Fig. 17 is a diagram showing an example of a device for detoxifying an NH₃-containing gas at a high temperature.
Fig. 18 is a diagram showing an example of a device for detoxifying an NH₃-containing gas at a high temperature.

### Description of Embodiments to carry out the Invention

A catalyst according to the present invention is a catalyst for promoting an ammonia decomposition reaction. The catalyst according to the present invention includes a mixture of a first catalyst powder and a second catalyst powder, or a mixture of a first catalyst powder, a second catalyst powder, and a third catalyst powder.

The first catalyst powder includes a catalyst support and a noble metal.

The catalyst support contains at least one selected from the group consisting of ceria, silica, alumina, titania, zirconia, and zeolite. As the catalyst support, a catalyst support containing silica and/or titania is preferably used. The catalyst support is preferably porous. The specific surface area of the catalyst support is not particularly limited, and is for example, preferably 10 to 1,000 m²/g, and more preferably 100 to 500 m²/g. Specific examples of the catalyst support include ceria powder, silica powder, alumina powder, titania powder, zirconia powder, or zeolite powder; a mixture of two or more powders selected from the group consisting of ceria powder, silica powder, alumina powder, titania powder, zirconia powder, and zeolite powder; a powder of a composite (for example, silica-titania, alumina-titania, ceria-titania, silica-alumina, silica-zirconia, or alumina-zirconia) of two or more selected from the group consisting of ceria, silica, alumina, titania, zirconia, and zeolite; and a powder in which on at least one powder selected from the group consisting of ceria powder, silica powder, alumina powder, titania powder, zirconia powder, and zeolite powder, at least one element selected from the group consisting of cerium, silicon, aluminum, titanium, and zirconium and different from the elements constituting the powder, and/or other base metal elements such as molybdenum, tungsten, and vanadium are doped, carried, or composited. The powder subjected to doping, carrying, or compositing tends to be highly resistant to hydrothermal aging.

The noble metal is at least one selected from the group consisting of gold, silver, platinum, ruthenium, rhodium, palladium, osmium, iridium, and rhenium. Platinum and/or iridium is particularly preferably used as the noble metal.

In the first catalyst powder, a noble metal is carried on a catalyst support. The proportion of the noble metal to the catalyst support in the first catalyst powder is preferably 0.01% to 10% by mass, more preferably 0.02% to 5% by mass, and still more preferably 0.05% to 2% by mass.

A metal element other than the noble metal may be carried on the catalyst support in the first catalyst powder. Examples of the metal element include rare earth elements such as cerium (Ce) and base metal elements such as molybdenum, tungsten, and vanadium. The proportion of the rare earth element to the catalyst support in the first catalyst powder is not particularly limited as long as the effects of the present invention are not inhibited. For example, the proportion of the mass of the rare earth element to the mass of the noble metal in the first catalyst powder is preferably 1 or more and less than 10, more preferably 3 or more and 7 or less, and still more preferably 4 or more and 6 or less. The first catalyst powder in which a metal element other than the noble metal is carried on the catalyst support tends to be highly resistant to hydrothermal aging.

The preparation of the first catalyst powder includes, for example, carrying a noble metal on a catalyst support, and performing pulverization or crushing as necessary, thereby obtaining a powder. The carrying can be performed by, for example, immersing a catalyst support in a solution, a suspension, or an emulsion containing a noble metal. Carrying a metal element other than the noble metal can also be performed in the same manner. Kneading, evaporation to dryness, drying, calcinating, and the like can be performed after immersion. The temperature during drying may be a temperature at which the liquid can be removed, and is, for example, 100°C to 150°C. The temperature during calcinating may be lower than the heat-resistant temperature of the catalyst support, and is, for example, 350°C to 550°C. The calcinating time is, for example, 1 to 5 hours.

The first catalyst powder is preferably porous. The pore size distribution of the first catalyst powder is not particularly limited. The first catalyst powder is not particularly limited by the particle size distribution, as long as it forms a fine powder. The particle size distribution can be adjusted by pulverization/crushing, classification, and the like.

The second catalyst powder includes zeolite and metal ions capable of being ion-exchanged therewith.

Examples of the zeolite include natural zeolites such as amicite, analcime, barrerite, bellbergite, bikitaite, boggsite, brewsterite, brewsterite-Sr, brewsterite-Ba, chabazite, chabazite-Ca, chabazite-Na, chabazite-K, chiavennite, clinoptilolite, clinoptilolite-K, clinoptilolite-Na, clinoptilolite-Ca, cowlesite, dachiardite, dachiardite-Ca, dachiardite-Na, edingtonite, epistilbite, erionite, erionite-Na, erionite-K, erionite-Ca, faujasite, faujasite-Na, faujasite-Ca, faujasite-Mg, ferrierite, ferrierite-Mg, ferrierite-K, ferrierite-Na, garronite, gaultite, gismondine, gmelinite, gmelinite-Na, gmelinite-Ca, gmelinite-K, gobbinsite, gonnardite, goosecreekite, gottardiite, harmotome, heulandite, heulandite-Ca, heulandite-Sr, heulandite-Na, heulandite-K, hsianghualite, kalborsite, laumontite, levyne, levyne-Ca, levyne-Na, lovdarite, maricopaite, mazzite, merlinoite, mesolite, montesommaite, mordenite, mutinaite, natrolite, offretite, pahasapaite, partheite, paulingite, paulingite-Na, paulingite-K, paulingite-Ca, perlialite, phillipsite, phillipsite-Na, phillipsite-K, phillipsite-Ca, pollucite, roggianite, scolecite, stellerite, stilbite, stilbite-Ca, stilbite-Na, terranovaite, thomsonite, tschernichite, tschortnerite, wairakite, weinebeneite, willhendersonite, and yugawaralite; and synthetic zeolites such as A type (LTA type) zeolite, X type (FAU type) zeolite, LSX type (FAU type) zeolite, beta type (BEA-type) zeolite, ZSM-5 type (MFI type) zeolite, ferrierite type (FER type) zeolite, mordenite type (MOR type) zeolite, L type (LTL type) zeolite, Y type (FAU type) zeolite, MCM-22 type (MWW type) zeolite, offretite/erionite type (O/E type) zeolite, AEI type zeolite, AEL type zeolite, AFT type zeolite, AFX type zeolite, CHA type zeolite, EAB type zeolite, ERI type zeolite, KFI type zeolite, LEV type zeolite, LTN type zeolite, MSO type zeolite, RHO type zeolite, SAS type zeolite, SAT type zeolite, SAV type zeolite, SFW type zeolite, TON type zeolite, and TSC type zeolite. Among these, a BEA-type zeolite is preferable. The proportion of SiO₂ to Al₂O₃ (SiO₂/Al₂O₃ ratio) in the zeolite is preferably 5 to 100, more preferably 7 to 50, and still more preferably 9 to 30. The larger the proportion of SiO₂, the higher the durability of the catalyst tends to be, but the larger the proportion of Al₂O₃, the larger the amount of the metal ions capable of being ion-exchanged. Therefore, there is an optimum value for the SiO₂/Al₂O₃ ratio. The zeolite is preferably porous. The pore size of the zeolite is not particularly limited, and is, for example, preferably 0.01 to 10 nm, and more preferably 0.2 to 2 nm.

The synthetic zeolite can be obtained, for example, by mixing a silica source, an alumina source, an alkali source, a solvent, an organic structure-directing agent (OSDA), a surfactant, and the like to obtain a starting reaction mixture, causing a hydrothermal reaction to occur with the starting reaction mixture under high temperature and high pressure in an autoclave. The synthetic zeolite obtained using this method contains an organic component derived from OSDA. The organic component can be removed by subsequent calcinating.

Some sort of synthetic zeolite can be obtained through a hydrothermal reaction without using OSDA. Further, some sort of synthetic zeolite can be obtained using a mechanochemical treatment or a vapor synthesis method without using OSDA. The synthetic zeolite obtained without using OSDA (hereinafter, may be referred to as OSDA-free zeolite) does not contain an organic component derived from OSDA. In the present invention, the OSDA-free zeolite can be preferably used. The SiO₂/Al₂O₃ molar ratio in the OSDA-free zeolite is preferably 1 or more, more preferably 5 or more, and still more preferably 8 or more. The upper limit of the SiO₂/Al₂O₃ molar ratio in the OSDA-free zeolite is, for example, preferably 50, more preferably 45, and still more preferably 40.

As the metal ions capable of being ion-exchanged, at least one ion selected from the group consisting of Fe ions, Ce ions, Co ions, and Cu ions is preferable, and Fe ions are more preferable.

In the second catalyst powder, a cation of an element constituting the zeolite is exchanged (ion-exchanged) with a cation of Fe, Ce, Co, or Cu. The second catalyst powder may include zeolite having at least one selected from the group consisting of Fe, Ce, Co, and Cu adhering (carried) thereon. The proportion of the metal ions capable of being ion-exchanged with the zeolite in the second catalyst powder is preferably 0.1% to 10% by mass, and more preferably 0.7% to 7% by mass. The proportion of the Fe ions to the zeolite is preferably 0.1 to 10% by mass, and more preferably 0.7 to 7% by mass.

The ion exchange can be conducted by immersing the zeolite in a liquid containing the metal ions capable of being ion-exchanged, and performing filtering/drying/calcinating as necessary.

The pH of the liquid containing the metal ions capable of being ion-exchanged, in which the zeolite is immersed, is preferably adjusted. The pH of the liquid containing the metal ions capable of being ion-exchanged is, for example, 1 to 8, preferably 3.5 to 7.5, and more preferably 5.5 to 7.0. To adjust the pH, a basic compound such as sodium hydroxide, potassium hydroxide, rubidium hydroxide, cesium hydroxide, sodium carbonate, or potassium carbonate, or an acidic compound such as hydrochloric acid or nitric acid can be used.

The temperature during drying may be a temperature at which the liquid can be removed, and is, for example, 100°C to 150°C. The temperature during calcinating may be lower than the heat-resistant temperature of the zeolite, and is, for example, 350°C to 800°C. The calcinating time can be appropriately set according to the temperature during calcinating, and is, for example, 1 to 10 hours. After ion exchange, pulverization or crushing can be performed as necessary to obtain a powder.

The second catalyst powder is preferably porous. The pore size distribution of the second catalyst powder is not particularly limited. The second catalyst powder is not particularly limited by the particle size distribution, as long as it forms a fine powder. The particle size distribution can be adjusted by pulverization/crushing, classification, and the like.

The second catalyst powder has acid sites derived from an OH group or the like. The properties of the acid sites can generally be observed by a method known as a pyridine-TPD method. In the pyridine-TPD method, for example, a hydrogen flame ionization detector (FID) can be used as a detector. Pyridine is adsorbed on the acid sites. Pyridine can be adsorbed on the acid sites of both an outer surface and an inner surface of pores of the catalyst. It is generally understood that, as the temperature at which the adsorbed pyridine desorbs increases, the acid strength of the acid sites increases. In addition, it is also said that pyridine desorbed at a high temperature is derived from an acid site affected by diffusion, that is, an acid site on the inner surface of the pores (Nakano et al., "Measurement of Acidity of Various Zeolites by Temperature-Programmed Desorption Method", Toyo Soda Research Report, Vol. 29, No. 1 (1985), pp. 3-11). It is said that the effective molecular diameter of pyridine is 5.8 Å (refer to Anderson et al. J. Catal., 58, 114 (1979)). The total amount of acid sites can be determined by the saturated adsorption amount of pyridine. When pyridine is adsorbed and subsequently is heated at a certain rate (20 °C/min), the acid strength distribution of the acid sites can be determined by a distribution of the amounts of pyridine desorbed at respective temperatures (this distribution may be referred to as a TPD spectrum). In the present invention, the adsorption of pyridine can be performed at room temperature to 150°C, and preferably at 150°C.

In a TPD spectrum of the second catalyst powder, a ratio of a total amount of pyridine desorbed in a range of 150°C or higher and lower than 450°C to a total amount of pyridine desorbed in a range of 450°C or higher and 800°C or lower is preferably 0.9 or more, more preferably 0.98 or more, still more preferably 1 or more, and yet still more preferably 1.1 or more. The upper limit of the ratio of the total amount of pyridine desorbed in a range of 150°C or higher and lower than 450°C to the total amount of pyridine desorbed in a range of 450°C or higher and 800°C or lower is not particularly limited as long as the catalyst can be produced.

In the TPD spectrum of the second catalyst powder, the total amount of pyridine desorbed in a range of 150°C or higher and lower than 450°C is preferably 100 µmol or more, more preferably 200 µmol or more, still more preferably 250 µmol or more, and yet still more preferably 300 µmol or more per 1 g of the catalyst. The upper limit of the total amount of pyridine desorbed in a range of 150°C or higher and lower than 450°C is not particularly limited as long as the catalyst can be produced.

In the TPD spectrum of the second catalyst powder, the total amount of pyridine desorbed in a range of 450°C or higher and 800°C or lower is preferably 1,000 µmol or less, more preferably 800 µmol or less, and still more preferably 500 µmol or less per 1 g of the catalyst. The lower limit of the total amount of pyridine desorbed in a range of 450°C or higher and 800°C or lower is not particularly limited as long as the catalyst can be produced.

In the TPD spectrum of the second catalyst powder, a value of a L peak (a pyridine desorption amount at a peak top present in a range of 150°C or higher and lower than 450°C) is more than a value of a H peak (a pyridine desorption amount at a peak top present in a range of 450°C or higher and 800°C or lower). That is, a ratio of the value of the L peak to the value of the H peak is preferably more than 1, more preferably 1.12 or more, still more preferably 1.2 or more, yet still more preferably 1.4 or more, and most preferably 1.6 or more. The upper limit of the ratio of the value of the L peak to the value of the H peak is not particularly limited as long as the catalyst can be produced.

In the TPD spectrum of the second catalyst powder, the lower limit of a temperature at which the H peak appears (a temperature at a peak top in a range of 450°C or higher and 800°C or lower) is preferably 490°C, more preferably 510°C, and still more preferably 530°C, and the upper limit thereof is preferably 650°C, more preferably 620°C, still more preferably 600°C, and yet still more preferably 580°C.

In the second catalyst powder, the saturated adsorption amount of pyridine is preferably large. In the second catalyst powder, the saturated adsorption amount of pyridine is preferably 100 µmol or more, more preferably 200 µmol or more, still more preferably 500 µmol or more, and yet still more preferably 700 µmol or more per 1 g of the catalyst. In the second catalyst powder, as long as the catalyst can be produced, the upper limit of the saturated adsorption amount of pyridine is not particularly limited, and is, for example, preferably 2,000 µmol, and more preferably 1,500 µmol per 1 g of the catalyst. The saturated adsorption amount of pyridine can be measured at 150°C.

The second catalyst powder preferably has a large crystallite size. In the second catalyst powder, the crystallite size is preferably 5 nm or more, more preferably 10 nm or more, still more preferably 20 nm or more, and yet still more preferably 30 nm or more. In the second catalyst powder, the upper limit of the crystallite size is not particularly limited as long as the catalyst can be produced, and is, for example, preferably 100 nm, and more preferably 80 nm. The crystallite size can be measured using an X-ray diffraction method (for example, refer to JIS H 7805 or JIS R 7651).

Even after being exposed to a gas at 530°C containing 20% of H₂O and 20 ppm of SO₂ for 70 hours, the second catalyst powder preferably has a high NO₂ decomposition rate and a high NO decomposition rate. Even after being exposed to a gas at 530°C containing 20% of H₂O and 20 ppm of SO₂ for 70 hours, the second catalyst powder preferably has an NO₂ decomposition rate of 60% or more and an NO decomposition rate of 90% or more under a condition of 450°C.

The third catalyst powder includes an oxide of titanium, an oxide of tungsten and/or molybdenum, and an oxide of cerium and/or vanadium, and preferably includes an oxide of titanium, an oxide of tungsten, and an oxide of cerium.

The proportion of a Ce element and/or a V element to a Ti element is preferably 1% to 20% by mass, and more preferably 3% to 15% by mass as a percentage by weight of (CeO₂ + V₂O₅)/TiO₂.

The proportion of a Mo element and/or a W element to a Ti element is preferably 1% to 50% by mass, and more preferably 10% to 40% by mass as a percentage by weight of (MoO₃ + WO₃)/TiO₂.

In the preparation of the third catalyst powder, a titanium oxide powder or a titanium oxide precursor can be used as a raw material of the oxide of titanium. Examples of the titanium oxide precursor include titanium oxide slurry, titanium oxide sol, titanium sulfate, titanium tetrachloride, titanate, and titanium alkoxide. In the present invention, an anatase-type TiO₂ is preferably used as a raw material of the oxide of titanium. As a raw material of the oxide of vanadium, a vanadium compound such as vanadium pentoxide, ammonium metavanadate, and vanadyl sulfate can be used. As a raw material of the oxide of tungsten, ammonium paratungstate, ammonium metatungstate, tungsten trioxide, tungsten chloride, and the like can be used. As a raw material of the oxide of molybdenum, ammonium molybdate, molybdenum trioxide, and the like can be used. As a raw material of the oxide of cerium, cerium(III) nitrate, cerium(IV) nitrate, cerium carbonate, cerium(III) sulfate, cerium(IV) sulfate, cerium(III) acetate, and the like can be used.

The third catalyst powder may include an oxide of P, an oxide of S, an oxide of Al (for example, alumina), an oxide of Si (for example, glass fiber), an oxide of Zr (for example, zirconia), gypsum (for example, gypsum dihydrate), zeolite, and the like as a promoter or an additive. These can be used in the form of powder, sol, slurry, fiber, or the like in the preparation of the catalyst.

The preparation of the third catalyst powder includes, for example, adding a solvent (for example, water) to raw materials of the respective oxides and an optional promoter or additive, performing kneading, subjecting the obtained kneaded material to evaporation to dryness, drying, and calcinating, and performing pulverization or crushing as necessary to obtain a powder. The temperature during drying may be a temperature at which the liquid can be removed, and is, for example, 100°C to 150°C. The temperature during calcinating may be lower than the heat-resistant temperature of the oxide, and is, for example, 350°C to 550°C. The calcinating time is, for example, 1 to 5 hours.

The third catalyst powder is preferably porous. The pore size distribution of the third catalyst powder is not particularly limited. The third catalyst powder is not particularly limited by the particle size distribution, as long as it forms a fine powder. The particle size distribution can be adjusted by pulverization/crushing, classification, and the like.

The catalyst according to the present invention can be obtained by mixing the first catalyst powder and the second catalyst powder or mixing the first catalyst powder, the second catalyst powder, and the third catalyst powder. The mixing may be dry mixing or wet mixing. After mixing, it is possible to conduct drying or calcinating, pulverization/crushing, granulation, and classification as necessary. The temperature during drying may be a temperature at which the liquid can be removed, and is, for example, 100°C to 150°C. The temperature during calcinating may be lower than the heat-resistant temperature of the oxide, and is, for example, preferably 350°C to 650°C, more preferably 450°C to 600°C, and still more preferably 480°C to 570°C. The calcinating time can be appropriately set according to the temperature during calcinating, and is, for example, 1 to 5 hours. The catalyst according to the present invention is not particularly limited by the particle size distribution. The particle size distribution can be adjusted by pulverization/crushing, granulation, classification, and the like.

The mixing ratio of the first catalyst powder and the second catalyst powder or the mixing ratio of the first catalyst powder, the second catalyst powder, and the third catalyst powder can be set, for example, so that the NH₃ concentration, the NO_{X} concentration, and the N₂O concentration are each within a predetermined range in a gas which flows out from the catalyst layer or reactor.

The amount of the first catalyst powder included in the catalyst according to the present invention is preferably 0.01% to 10% by mass, more preferably 0.1% to 5% by mass, and still more preferably 0.5% to 3% by mass.

The amount of the noble metal included in the catalyst according to the present invention is preferably 0.05 to 1,000 ppm, more preferably 0.1 to 500 ppm, and still more preferably 5 to 200 ppm.

The amount of the second catalyst powder is preferably 1 to 100 parts by mass, more preferably 10 to 70 parts by mass, and still more preferably 20 to 55 parts by mass per 1 part by mass of the first catalyst powder.

The third catalyst powder can be mixed in a case where heat resistance is required. The amount of the third catalyst powder is preferably 0 to 70 parts by mass, more preferably 0 to 50 parts by mass, and still more preferably 0 to 30 parts by mass per 1 part by mass of the first catalyst powder. As the proportion of the third catalyst powder increases, the NH₃ concentration at the outlet can be lowered in a reaction at a high temperature of 500°C or higher.

For the catalyst according to the present invention, the above-described mixture may be allowed to adhere to (carried on) a support to obtain a catalyst structure, or may be molded to obtain a catalyst structure. Examples of the support include a honeycomb support; a corrugated support; and a plate-like support (lath plate) such as expanded metal and perforated metal (punched metal). The amount of the catalyst adhering to the support can be appropriately set in consideration of an improvement in catalyst filling rate and the like.

The mixture can be molded into a shape such as a honeycomb, a corrugated shape, a cone, a truncated cone, an ellipsoid, a spindle, a Raschig ring, a Dixson, a saddle, or a Mc Mahon in consideration of an improvement in catalyst filling rate, suppression of an increase in head loss, and the like.

After carrying on the support or molding, drying or calcinating can be performed as necessary. The temperature during drying may be a temperature at which the liquid can be removed, and is, for example, 100°C to 150°C. The temperature during calcinating may be lower than the heat-resistant temperature of the oxide, and is, for example, preferably 350°C to 650°C, more preferably 450°C to 600°C, and still more preferably 480°C to 570°C. The calcinating time can be appropriately set according to the temperature during calcinating, and is, for example, 1 to 5 hours.

A method according to the present invention is a method for reducing poisonous gas components to be treated. Here, the gas to be treated means a gas which flows into a catalyst layer (a place where the catalyst according to the present invention is present) or a gas which passes through the catalyst layer. In a case where catalyst layers are arranged in multiple stages in series, the gas to be treated includes not only a gas which flows into a former catalyst layer or a gas which passes through the former catalyst layer, but also a gas which flows into a latter catalyst layer or a gas which passes through the latter catalyst layer.

The gas to be treated contains NH₃ and O₂. For example, in a case where an NH₃-containing gas has a high O₂ concentration, the NH₃-containing gas can be used as it is as the gas to be treated. In a case where the O₂ concentration in the NH₃-containing gas is not high, a gas obtained by mixing the NH₃-containing gas and an O₂-containing gas can be used as the gas to be treated.

Examples of the NH₃-containing gas include an exhaust gas generated by combustion of ammonia fuel, an exhaust gas emitted by purging of ammonia-related equipment, and an exhaust gas emitted in the treatment for ammonia-containing wastewater. As the NH₃-containing gas, for example, it is possible to use gases discharged from the fields where ammonia is stored and used, such as ammonia fuel ships, ammonia transport ships, ammonia fuel storage bases, ammonia tanks for a denitration apparatus in a power plant, and ammonia cooling/refrigerating apparatuses, and the fields where ammonia-containing wastewater, such as wastewater from food/beverage manufacturing, chemical factory wastewater, plating wastewater, wastewater from semiconductor component manufacturing, and domestic wastewater, is treated. In a case where NH₃ is dissolved in a liquid, adsorbed on a solid, or the like, NH₃ can be vaporized by a stripping tower, a vaporizer, or the like and used.

As the O₂-containing gas, for example, the air can be used. The mass ratio of O₂ to NH₃ and the temperature of the gas to be treated can be set, for example, so that the NH₃ concentration, the NO_{X} concentration, and the N₂O concentration are each within a predetermined range in a gas which flows out from the catalyst layer or reactor. The temperature can be adjusted by a known method using, for example, a temperature adjustment device such as a heater, a heat exchanger, or a cooler. A gas which flows out from the catalyst layer may be used as a heat transfer medium to be used for adjusting the temperature of the gas to be treated. The exhaust gas generated by combustion of ammonia fuel contains NO_{X} or/and N₂O. The gas to be treated may further contain NO_{X} or/and N₂O.

The method according to the present invention includes performing a chemical reaction in which NH₃ contained in the gas to be treated is converted into nitrogen and water and a chemical reaction in which NO_{X} and N₂O contained in the gas to be treated are converted into nitrogen and water in the presence of the catalyst according to the present invention. NO_{X} and N₂O may be originally contained in the gas which flows into the catalyst layer or may be generated during passing through the catalyst layer.

The chemical reaction is preferably performed in a continuous flow type reactor. A catalyst layer is present in the reactor. In the continuous flow type, a gas adjusted to a predetermined temperature flows in from a reactor inlet to cause a chemical reaction in the catalyst layer in the reactor, and the gas flows out from a reactor outlet.

The catalyst according to the present invention can be installed in the reactor in the form of fixed bed, fluidized bed, moving bed, simulated moving bed, or the like, and preferably in the form of fixed bed or simulated moving bed.

The space velocity [1/hr] (= volume flow rate (m³/hr)/catalyst volume (m³)) of the gas which flows in the reactor can be set, for example, so that the NH₃ concentration, the NO_{X} concentration, and the N₂O concentration are each within a predetermined range in the gas which flows out from the catalyst layer or reactor. The temperature of the gas at the reactor inlet is, for example, preferably 300°C to 600°C, and more preferably 350°C to 550°C.

The method according to the present invention preferably includes adding at least one reducing agent selected from the group consisting of ammonia and urea to the gas to be treated. Urea decomposes into carbon dioxide and ammonia through an endothermic reaction. The reducing agent is preferably added in a case where the amounts of NO_{X} and N₂O contained in the gas to be treated are large, or the like.

The method according to the present invention preferably further includes cooling the gas to be treated. In many cases, the gas discharged from a combustion device such as a furnace or an internal combustion engine is at a high temperature. The inflow of the high-temperature gas to be treated increases the temperature of the catalyst layer. An excessive increase in temperature of the catalyst layer increases the risk of catalyst deterioration. In a case where the temperature of the gas to be treated is too high, the gas to be treated is preferably cooled to prevent the catalyst deterioration. In order to cool the gas to be treated, a low-temperature gas such as the air can be added to the gas to be treated, or heat exchange can be performed between the gas to be treated and a refrigerant.

The method according to the present invention preferably further includes adjusting the amount of the reducing agent to be added to the gas to be treated on the basis of the temperature of the treated gas and the amounts of NO_{X} and N₂O contained in the treated gas. The method according to the present invention preferably further includes adjusting a degree of cooling the gas to be treated on the basis of the temperature of the treated gas. The temperature of the treated gas is an alternative value of the temperature of the catalyst layer. The temperature of the treated gas is preferably measured in the vicinity of the outlet of the catalyst layer or the outlet of the reactor. In a case where the temperature of the catalyst layer can be directly measured, the measured temperature may be used. Here, the treated gas means a gas which has flowed out from the catalyst layer (a place where the catalyst according to the present invention is present). In a case where catalyst layers are arranged in multiple stages in series, the treated gas includes not only a gas which has flowed out from a former catalyst layer, but also a gas which has flowed out from a latter catalyst layer. However, in a case where the amount of the reducing agent or the degree of cooling is adjusted, the gas to be treated, to which the reducing agent is added or which is cooled, is preferably a gas to be treated in a stage prior to the treated gas whose temperature or the like has been measured.

The amount of the reducing agent to be added and the degree of cooling of the gas to be treated can be adjusted in consideration of, for example, the following points.

The direct ammonia decomposition reaction is an exothermic reaction. In a case where the amount of ammonia used for the direct decomposition reaction increases, the temperature of the catalyst layer increases, and the temperature of the treated gas increases. That is, the addition of the reducing agent may increase the temperature of the treated gas. In addition, the inflow of the high-temperature gas to be treated increases the temperature of the catalyst layer. As the temperature of the catalyst layer increases, the rates of the direct ammonia decomposition reaction and the N₂O decomposition reaction tend to increase. However, as the temperature of the catalyst layer increases, the risk of catalyst deterioration increases. The direct ammonia decomposition reaction, the NO_{X} decomposition reaction, and the N₂O decomposition reaction reduce the ammonia in the gas to be treated. In a case where the amount of ammonia is reduced, the NO_{X} decomposition reaction and the N₂O decomposition reaction are less likely to proceed, and the amounts of NO_{X} or N₂O in the treated gas may increase.

The temperature of the treated gas in each stage is, for example, preferably 400°C to 600°C, and more preferably 450°C to 550°C. The concentration of NO_{X} in the treated gas in the final stage is, for example, preferably 500 ppm or less, and more preferably 200 ppm or less. The concentration of N₂O in the treated gas in the final stage is, for example, preferably 100 ppm or less, and more preferably 10 ppm or less.

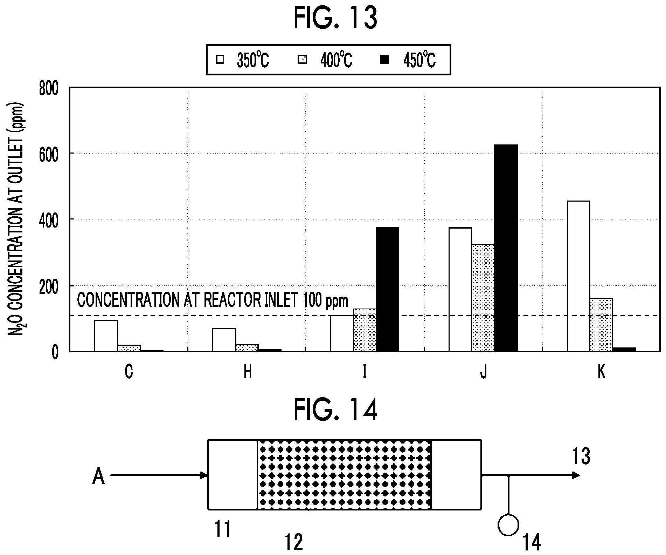

A device for reducing poisonous gas components to be treated shown in Fig. 14 includes a reactor 11 and a catalyst layer 12.

The device shown in Fig. 14 can be suitably used for the treatment of an NH₃-containing gas at a high temperature such as an exhaust gas from NH₃ fuel combustion.

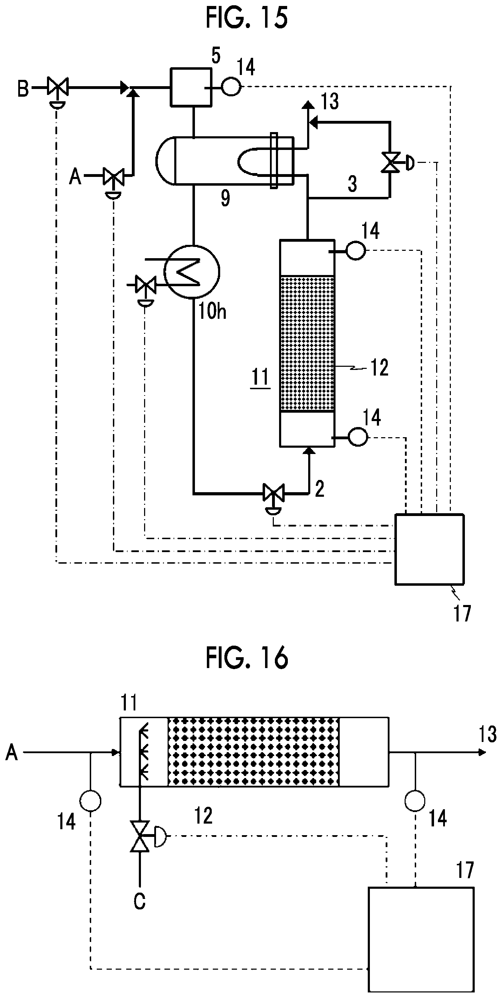

A device for reducing poisonous gas components to be treated shown in Fig. 15 includes a temperature adjustment mechanism, a reactor 11, a catalyst layer 12, and a control device 17.

The temperature adjustment mechanism in the device shown in Fig. 15 is configured to be able to increase the temperature of the gas to be treated to a predetermined temperature. The device shown in Fig. 15 is provided with a heat exchanger 9 configured to perform heat exchange between the gas to be treated and the treated gas, and a heater 10h configured to perform heat exchange between the gas to be treated and an external heat source. The device shown in Fig. 15 can be suitably used for the treatment of an NH₃-containing gas at a low temperature such as a purge gas of NH₃-related equipment. It is configured to be able to obtain a gas to be treated by mixing an NH₃-containing gas A and an O₂-containing gas B in a mixer 5. The amount of each of the NH₃-containing gas A and the O₂-containing gas B to be supplied can be adjusted by the opening degree of each control valve. The amount of the treated gas to be supplied to the heat exchanger 9 can be adjusted by the opening degree of a control valve installed in a heat exchanger bypass pipe 3, and thus the amount of heat to be exchanged in the heat exchanger 9 can be adjusted. In a case where the temperature of the gas to be treated can be adjusted, it is not necessary to provide the heat exchanger 9 and/or the heater 10h.

The catalyst layer 12 consists of the catalyst or catalyst structure according to the present invention, and is fixed in the reactor 11. The inflow amount of the gas to be treated to the catalyst layer can also be adjusted by the opening degree of a control valve installed in a catalyst layer inflow pipe 2. Preferably, the amount of the gas to be treated which flows in through the catalyst layer inflow pipe 2 is substantially constant in order to stably perform the chemical reaction in the catalyst layer 12.

A measurement mechanism measures physical property values necessary for monitoring the operation state of the device. The device shown in Fig. 15 is configured so that a plurality of pieces of measurement equipment 14 can measure the gas temperature of the mixer; the gas temperature, the NH₃ concentration, the O₂ concentration, the NO_{X} concentration, the N₂O concentration, and the like on the inlet side of the catalyst layer; and the gas temperature, the NH₃ concentration, the O₂ concentration, the NO_{X} concentration, the N₂O concentration, and the like on the outlet side of the catalyst layer.

The device is configured so that, on the basis of the values measured by the measurement mechanism, the amount of the NH₃-containing gas A to be supplied, the amount of the O₂-containing gas B to be supplied, the amount of the gas to be treated that is allowed to flow into the catalyst layer, the temperature of the gas to be treated that is allowed to flow into the catalyst layer, and the like can be controlled. An objective of the control in the control device 17 is, for example, to prevent a high temperature state such as a hot spot from occurring in the catalyst layer and to reduce N₂O, NO_{X}, and/or NH₃ contained in exhaust 13.

A device for reducing poisonous gas components to be treated shown in Fig. 16 includes a reactor 11, a catalyst layer 12, and a control device 17. The device shown in Fig. 16 can be suitably used for the treatment of an NH₃-containing gas at a high temperature such as an exhaust gas from NH₃ fuel combustion. Each amount of a reducing agent C to be supplied can be adjusted by the opening degree of a control valve. A measurement mechanism measures physical property values necessary for monitoring the operation state of the device. The device shown in Fig. 16 is configured so that a plurality of pieces of measurement equipment 14 can measure the gas temperature of the mixer; the gas temperature, the NH₃ concentration, the O₂ concentration, the NO_{X} concentration, the N₂O concentration, and the like on the inlet side of the catalyst layer; and the gas temperature, the NH₃ concentration, the O₂ concentration, the NO_{X} concentration, the N₂O concentration, and the like on the outlet side of the catalyst layer.

The device is configured so that, on the basis of the values measured by the measurement mechanism, the amount of the reducing agent C to be supplied and the like can be controlled. An objective of the control in the control device 17 is, for example, to prevent a high temperature state such as a hot spot from occurring in the catalyst layer and to reduce N₂O, NO_{X}, and/or NH₃ contained in exhaust 13. Other configurations are the same as those of the device shown in Fig. 14.

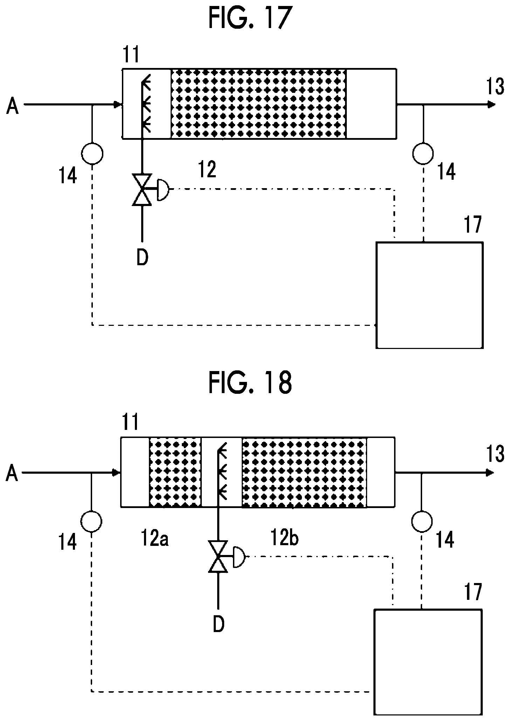

A device for reducing poisonous gas components to be treated shown in Fig. 17 includes a temperature adjustment mechanism, a reactor 11, a catalyst layer 12, and a control device 17.

The temperature adjustment mechanism in the device shown in Fig. 17 is configured to be able to reduce the temperature of the gas to be treated to a predetermined temperature. The device shown in Fig. 17 is provided with a cooling air supply device for reducing the temperature of the gas to be treated. The device shown in Fig. 17 can be suitably used for the treatment of an NH₃-containing gas at a high temperature such as an exhaust gas of a combustion device. Supplying the air having a lower temperature than the gas to be treated has an effect of reducing the temperature of the gas to be treated. The same effect as the supply of cooling air can also be obtained by providing a cooler configured to be able to perform heat exchange with an external cold source. Other configurations are the same as those of the device shown in Fig. 14.

A device for reducing poisonous gas components to be treated shown in Fig. 18 includes a temperature adjustment mechanism, a reactor 11, catalyst layers 12a and 12b, and a control device 17.

The temperature adjustment mechanism in the device shown in Fig. 18 is configured to be able to reduce the temperature of the gas which flows out from the catalyst layer 12a to a predetermined temperature before the gas flows into the catalyst layer 12b. The device shown in Fig. 18 is provided with a cooler configured to be able to supply cooling air for reducing the temperature to the gas which flows out from the catalyst layer 12a. The device shown in Fig. 18 can be suitably used for the treatment of an NH₃-containing gas at a high temperature such as an exhaust gas of a combustion device. The same effect as the supply of cooling air can also be obtained by providing a cooler configured to be able to perform heat exchange with an external cold source. Other configurations are the same as those of the device shown in Fig. 14.

Next, examples for demonstrating the effects of the present invention will be described. However, the scope of the present invention is not limited to the examples.

### [Example 1: Honeycomb Catalyst A]

### (Preparation of First Catalyst Powder (1))

100 g of an amorphous silica powder was added to an aqueous solution of chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (1) in which 0.05% by mass of platinum was carried on the amorphous silica powder.

### (Preparation of Second Catalyst Powder (1))

60 g of a BEA-type zeolite powder (SiO₂/Al₂O₃ ratio = 25) was poured into 2,000 ml of an aqueous solution containing 9.1 g of iron(II) sulfate heptahydrate (FeSO₄·7H₂O) heated to 80°C. Next, in a state in which the temperature was kept at 80°C, the mixture was stirred for 2 hours to obtain a slurry. The slurry was dehydrated using a suction funnel to which filter paper (No. 5C) was attached. Pure water was poured to clean the cake on the filter paper. The cleaned cake was dried at 110°C for 12 hours. The dried cake was put into a furnace, and the temperature was increased at 100°C/h to sinter the cake at 500°C for 5 hours. The sintered product was pulverized to obtain a second catalyst powder (1) in which the zeolite was ion-exchanged with Fe ions.

### (Preparation of Third Catalyst Powder)

110 g of cerium(III) nitrate hexahydrate (Ce(NO₃)₃·6H₂O), 385 g of ammonium metatungstate, and 55 g of an oxalic acid were dissolved in 700 g of water. The aqueous solution was poured to a mixed powder of 715 g of an anatase-type TiO₂ having a specific surface area of 300 m²/g or more and 385 g of an anatase-type TiO₂ having a specific surface area of 90 m²/g or less, and kneaded for 1 hour or longer. The obtained kneaded material was granulated. The granules were dried at 120°C for 4 hours. The dried product was sintered in the air at 500°C for 2 hours. The obtained sintered product was pulverized to obtain a third catalyst powder containing an oxide of titanium, an oxide of tungsten, and an oxide of cerium.

### (Production of Honeycomb Catalyst)

2 parts by mass of the first catalyst powder (1), 78 parts by mass of the second catalyst powder (1), and 20 parts by mass of the third catalyst powder were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst A. The amount of the platinum contained in the catalyst of the honeycomb catalyst A was 10 ppm.

### (Evaluation (1) of Catalyst)

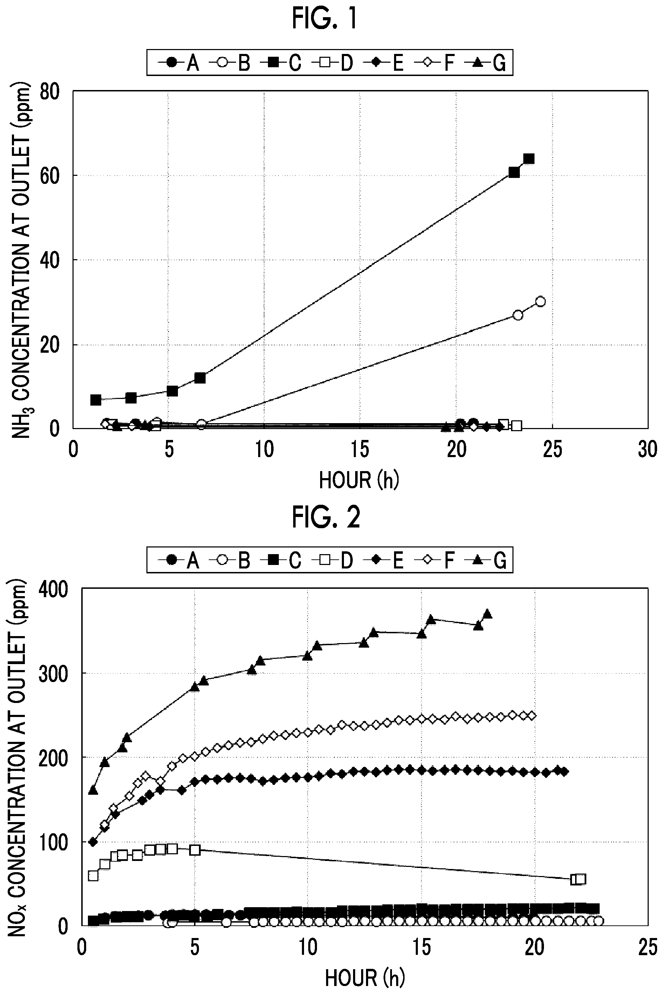

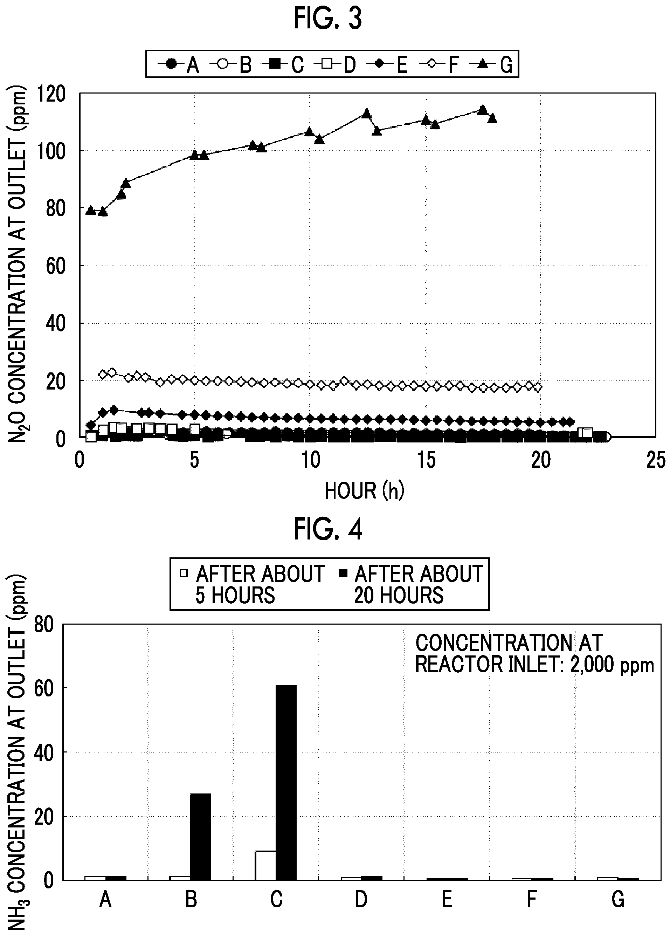

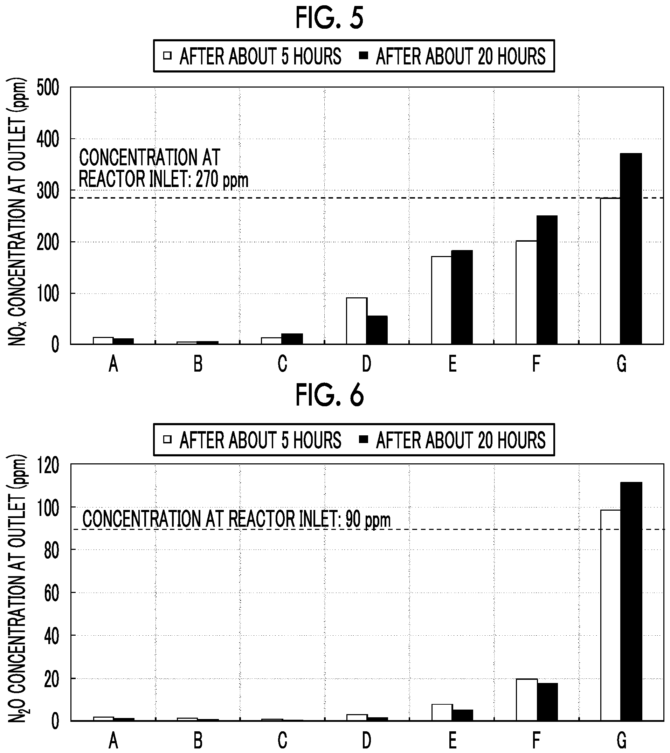

The honeycomb catalyst A was fitted and fixed in a tubular reactor. A simulant gas A containing the components shown in Table 1 was allowed to flow in the tubular reactor at AV = 13 Nm/hr (AV = gas amount/geometric surface area of honeycomb catalyst), and the temperature of the tubular reactor was set to 550°C. An NH₃ concentration, an NO_{X} concentration, and an N₂O concentration were measured at a reactor outlet. Figs. 1 to 6 show the results.

### [Table 1]

**Table 1**

| Gas Kind | Concentration |
|---|---|
| O₂ | 20% |
| SO₂ | 20 ppm |
| N₂O | 90 ppm |
| NO | 270 ppm |
| NH₃ | 2000 ppm |
| H₂O | 18% |
| N₂ | Balance |

### [Example 2: Honeycomb Catalyst B]

A honeycomb catalyst B was obtained in the same manner as in Example 1, except that 2 parts by mass of the first catalyst powder (1), 78 parts by mass of the second catalyst powder (1), and 20 parts by mass of the third catalyst powder were changed to 2 parts by mass of the first catalyst powder (1), 88 parts by mass of the second catalyst powder (1), and 10 parts by mass of the third catalyst powder. An NH₃ concentration, an NO_{X} concentration, and an N₂O concentration were measured at a reactor outlet in the same manner as in Example 1, except that the honeycomb catalyst A was changed to the honeycomb catalyst B. Figs. 1 to 6 show the results.

### [Example 3: Honeycomb Catalyst C]

A honeycomb catalyst C was obtained in the same manner as in Example 1, except that 2 parts by mass of the first catalyst powder (1), 78 parts by mass of the second catalyst powder (1), and 20 parts by mass of the third catalyst powder were changed to 2 parts by mass of the first catalyst powder (1) and 98 parts by mass of the second catalyst powder (1). An NH₃ concentration, an NO_{X} concentration, and an N₂O concentration were measured at a reactor outlet in the same manner as in Example 1, except that the honeycomb catalyst A was changed to the honeycomb catalyst C. Figs. 1 to 6 show the results.

### [Example 4: Honeycomb Catalyst D]

A honeycomb catalyst D was obtained in the same manner as in Example 1, except that 2 parts by mass of the first catalyst powder (1), 78 parts by mass of the second catalyst powder (1), and 20 parts by mass of the third catalyst powder were changed to 2 parts by mass of the first catalyst powder (1), 70 parts by mass of the second catalyst powder (1), and 28 parts by mass of the third catalyst powder. An NH₃ concentration, an NO_{X} concentration, and an N₂O concentration were measured at a reactor outlet in the same manner as in Example 1, except that the honeycomb catalyst A was changed to the honeycomb catalyst D. Figs. 1 to 6 show the results.

### [Example 5: Honeycomb Catalyst E]

A honeycomb catalyst E was obtained in the same manner as in Example 1, except that 2 parts by mass of the first catalyst powder (1), 78 parts by mass of the second catalyst powder (1), and 20 parts by mass of the third catalyst powder were changed to 2 parts by mass of the first catalyst powder (1), 50 parts by mass of the second catalyst powder (1), and 48 parts by mass of the third catalyst powder. An NH₃ concentration, an NO_{X} concentration, and an N₂O concentration were measured at a reactor outlet in the same manner as in Example 1, except that the honeycomb catalyst A was changed to the honeycomb catalyst E. Figs. 1 to 6 show the results.

### [Example 6: Honeycomb Catalyst F]

A honeycomb catalyst F was obtained in the same manner as in Example 1, except that 2 parts by mass of the first catalyst powder (1), 78 parts by mass of the second catalyst powder (1), and 20 parts by mass of the third catalyst powder were changed to 2 parts by mass of the first catalyst powder (1), 30 parts by mass of the second catalyst powder (1), and 68 parts by mass of the third catalyst powder. An NH₃ concentration, an NO_{X} concentration, and an N₂O concentration were measured at a reactor outlet in the same manner as in Example 1, except that the honeycomb catalyst A was changed to the honeycomb catalyst F. Figs. 1 to 6 show the results.

### [Example 7: Honeycomb Catalyst G]

A honeycomb catalyst G was obtained in the same manner as in Example 1, except that 2 parts by mass of the first catalyst powder (1), 78 parts by mass of the second catalyst powder (1), and 20 parts by mass of the third catalyst powder were changed to 2 parts by mass of the first catalyst powder (1) and 98 parts by mass of the third catalyst powder. An NH₃ concentration, an NO_{X} concentration, and an N₂O concentration were measured at a reactor outlet in the same manner as in Example 1, except that the honeycomb catalyst A was changed to the honeycomb catalyst G. Figs. 1 to 6 show the results.

As described above, the honeycomb catalyst using the catalyst according to the present invention can decompose NH₃ with high efficiency (about 97% or more) even at a high temperature of 500°C or higher. In particular, the honeycomb catalyst bodies A, B, C, and D can decompose NH₃ and remove NO_{X} and N₂O with high efficiency.

### [Example 8: Honeycomb Catalyst C]

### (Production of Honeycomb Catalyst)

2 parts by mass of the first catalyst powder (1) and 98 parts by mass of the second catalyst powder (1) were added to pure water to obtain a slurry. The slurry was applied to a honeycomb substrate at a coating amount of 140 g/m². The slurry was dried at 120°C for 2 hours. Next, the resulting material was sintered at 500°C for 2 hours to obtain a honeycomb catalyst C. The amount of the platinum contained in the catalyst of the honeycomb catalyst C was 10 ppm.

### (Evaluation (2) of Catalyst)

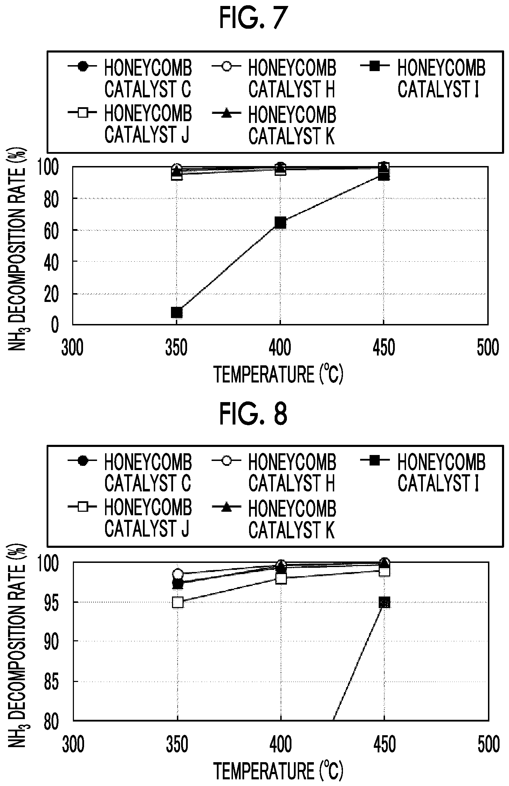

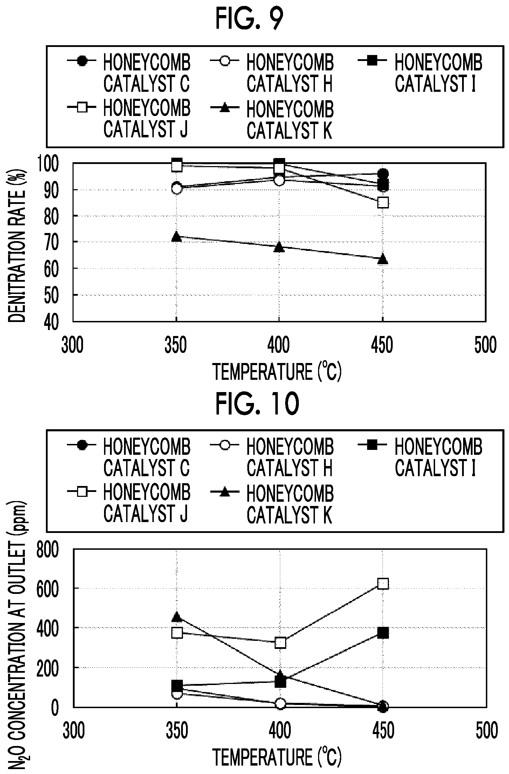

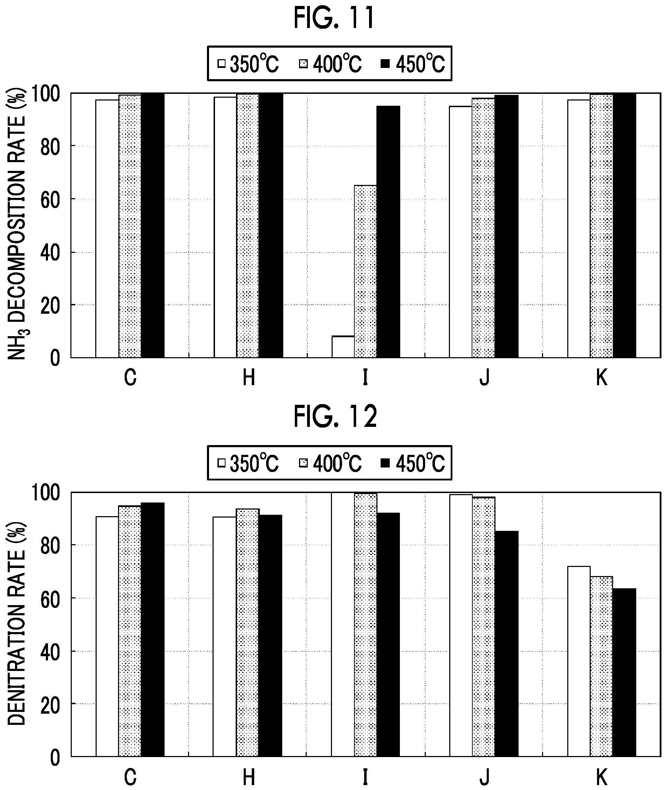

The honeycomb catalyst C was fixed in a tubular reactor. A simulant gas B containing the components shown in Table 2 was allowed to flow in the tubular reactor at AV = 13 Nm/hr (AV = gas amount/geometric surface area of honeycomb catalyst), and the temperature of the tubular reactor was set to 350°C, 400°C, or 450°C. An NH₃ concentration, an NO_{X} concentration, and an N₂O concentration were measured at a reactor outlet at each setting temperature. An NH₃ decomposition rate and an NO_{X} decomposition rate (denitration rate) were calculated. Figs. 7 to 13 show the results.

### [Table 2]

**Table 2**

| Gas Kind | Concentration |
|---|---|
| O₂ | 20% |
| SO₂ | 20 ppm |
| N₂O | 100 ppm |
| NO | 500 ppm |
| NH₃ | 6000 ppm |
| H₂O | 18% |
| N₂ | Balance |

### [Example 9: Honeycomb Catalyst H]

A honeycomb catalyst H was obtained in the same manner as in Example 8, except that 2 parts by mass of the first catalyst powder (1) and 98 parts by mass of the second catalyst powder (1) were changed to 4 parts by mass of the first catalyst powder (1) and 96 parts by mass of the second catalyst powder (1). The amount of the platinum contained in the catalyst of the honeycomb catalyst H was 20 ppm. An NH₃ concentration, an NO_{X} concentration, and an N₂O concentration were measured at a reactor outlet in the same manner as in Example 8, except that the honeycomb catalyst C was changed to the honeycomb catalyst H. An NH₃ decomposition rate and an NO_{X} decomposition rate (denitration rate) were calculated. Figs. 7 to 13 show the results.

### [Example 10: Honeycomb Catalyst I]

### (Preparation of NO_{X} Reduction Catalyst Powder)

715 g of an anatase-type TiO₂ powder having a specific surface of 300 m²/g or more, 385 g of an anatase-type TiO₂ powder having a specific surface area of 90 m²/g or less, 194 g of ammonium metatungstate, 80 g of ammonium metavanadate, 103 g of an oxalic acid, and 560 g of water were mixed to obtain a paste. The obtained paste was granulated. The granules were dried at 120°C for 4 hours, and then sintered at 500°C for 2 hours. The obtained sintered product was pulverized to obtain an NO_{X} reduction catalyst powder.

A honeycomb catalyst I was obtained in the same manner as in Example 8, except that 2 parts by mass of the first catalyst powder (1) and 98 parts by mass of the second catalyst powder (1) were changed to 1 part by mass of the first catalyst powder (1) and 99 parts by mass of the NO_{X} reduction catalyst powder. The amount of the platinum contained in the catalyst of the honeycomb catalyst I was 5 ppm. An NH₃ concentration, an NO_{X} concentration, and an N₂O concentration were measured at a reactor outlet in the same manner as in Example 8, except that the honeycomb catalyst C was changed to the honeycomb catalyst I. An NH₃ decomposition rate and an NO_{X} decomposition rate (denitration rate) were calculated. Figs. 7 to 13 show the results.

### [Example 11: Honeycomb Catalyst J]

A honeycomb catalyst J was obtained in the same manner as in Example 8, except that 2 parts by mass of the first catalyst powder (1) and 98 parts by mass of the second catalyst powder (1) were changed to 4 parts by mass of the first catalyst powder (1) and 96 parts by mass of the NO_{X} reduction catalyst powder. The amount of the platinum contained in the catalyst of the honeycomb catalyst J was 20 ppm. An NH₃ concentration, an NO_{X} concentration, and an N₂O concentration were measured at a reactor outlet in the same manner as in Example 8, except that the honeycomb catalyst C was changed to the honeycomb catalyst J. An NH₃ decomposition rate and an NO_{X} decomposition rate (denitration rate) were calculated. Figs. 7 to 13 show the results.

### [Example 12: Honeycomb Catalyst K]

A honeycomb catalyst K was obtained in the same manner as in Example 8, except that the BEA-type zeolite powder was changed to a mordenite (MOR) type zeolite powder (SiO₂/Al₂O₃ ratio = 25). An NH₃ concentration, an NO_{X} concentration, and an N₂O concentration were measured at a reactor outlet in the same manner as in Example 8, except that the honeycomb catalyst C was changed to the honeycomb catalyst K. An NH₃ decomposition rate and an NO_{X} decomposition rate (denitration rate) were calculated. Figs. 7 to 13 show the results.

### [Example 13: Honeycomb Catalyst L]

A honeycomb catalyst L was obtained in the same manner as in Example 8, except that the BEA-type zeolite powder was changed to a pentasil (MFI) type zeolite powder (SiO₂/Al₂O₃ ratio = 30). An NH₃ concentration, an NO_{X} concentration, and an N₂O concentration were measured at a reactor outlet in the same manner as in Example 8, except that the honeycomb catalyst C was changed to the honeycomb catalyst L, and an NH₃ decomposition rate and an NO_{X} decomposition rate (denitration rate) were calculated. The results of the honeycomb catalyst L were the same as those of the honeycomb catalyst K.

### [Example 14: Honeycomb Catalyst M]

### (Preparation of N₂O Decomposition Catalyst Powder)

60 g of a BEA-type zeolite powder (SiO₂/Al₂O₃ ratio = 25) was poured into 2,000 ml of an aqueous solution containing 7.3 g of copper(II) sulfate pentahydrate (CuSO₄·5H₂O) heated to 80°C. Next, in a state in which the temperature was kept at 80°C, the mixture was stirred for 2 hours to obtain a slurry. The slurry was dehydrated using a suction funnel to which filter paper (No. 5C) was attached. Pure water was poured to clean the cake on the filter paper. The cleaned cake was dried at 110°C for 12 hours. The dried cake was put into a furnace, and the temperature was increased at 100°C/h to sinter the cake at 500°C for 5 hours. The sintered product was pulverized to obtain an N₂O decomposition catalyst powder in which the zeolite was ion-exchanged with Cu ions.

A honeycomb catalyst M was obtained in the same manner as in Example 8, except that 2 parts by mass of the first catalyst powder (1) and 98 parts by mass of the second catalyst powder (1) were changed to 2 parts by mass of the first catalyst powder (1) and 98 parts by mass of the N₂O decomposition catalyst powder. An NH₃ concentration, an NO_{X} concentration, and an N₂O concentration were measured at a reactor outlet in the same manner as in Example 8, except that the honeycomb catalyst C was changed to the honeycomb catalyst M, and an NH₃ decomposition rate and an NO_{X} decomposition rate (denitration rate) were calculated. The results of the honeycomb catalyst M were the same as those of the honeycomb catalyst K. The N₂O concentration at the reactor outlet was low immediately after the reaction was started. However, the N₂O concentration gradually increased due to the deterioration thought to be caused by SO₂, and finally reached the same level as that of the honeycomb catalyst K.

The honeycomb catalyst bodies C and H using the catalyst according to the present invention hardly deteriorate by SO₂, and even in a situation where the NH₃ concentration increases, the honeycomb catalyst bodies C and H can simultaneously decompose NH₃, NO_{X}, and N₂O into H₂O and N₂ to make them harmless, while suppressing an increase in NO_{X} and N₂O contained in the exhaust.

### [Example 15: Honeycomb Catalyst N]

### (Preparation of First Catalyst Powder (2))

100 g of an amorphous silica powder was added to an aqueous solution of cerium nitrate hexahydrate (Ce(NO₃)₃·6H₂O) and chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (2) in which 0.25% by mass of cerium and 0.05% by mass of platinum were carried on the amorphous silica powder.

2 parts by mass of the first catalyst powder (2) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst N. The amount of the platinum contained in the catalyst of the honeycomb catalyst N was 10 ppm.

### (Evaluation (3) of Catalyst)

The honeycomb catalyst N was fitted and fixed in a tubular reactor. A simulant gas C containing the components shown in Table 3 was allowed to flow in the tubular reactor at AV = 13 Nm/hr (AV = gas amount/geometric surface area of honeycomb catalyst), and the temperature of the tubular reactor was set to 359°C, 415°C, 467°C, or 500°C. An NH₃ concentration, an NO_{X} concentration, and an N₂O concentration were measured at a reactor outlet. Table 5 shows the results.

### [Table 3]

**Table 3**

| Gas Kind | Concentration |
|---|---|
| O₂ | 20% |
| SO₂ | 20 ppm |
| N₂O | 100 ppm |
| NO | 3000 ppm |
| NH₃ | 20000 ppm |
| H₂O | 20% |
| N₂ | Balance |

### (Evaluation (4) of Catalyst)

The honeycomb catalyst N was fitted and fixed in a tubular reactor. A simulant gas D containing the components shown in Table 4 was allowed to flow in the tubular reactor at AV = 13 Nm/hr (AV = gas amount/geometric surface area of honeycomb catalyst), the temperature of the tubular reactor was set to 530°C, and the tubular reactor was left for 50 hours (hydrothermal aging). Then, a simulant gas C containing the components shown in Table 3 was allowed to flow in the tubular reactor at AV = 13 Nm/hr (AV = gas amount/geometric surface area of honeycomb catalyst), and the temperature of the tubular reactor was set to 359°C, 415°C, 467°C, or 500°C. An NH₃ concentration, an NO_{X} concentration, and an N₂O concentration were measured at a reactor outlet. Table 5 shows the results.

### [Table 4]

**Table 4**

| Gas Kind | Concentration |
|---|---|
| O₂ | 20% |
| SO₂ | 20 ppm |
| N₂O | 0 ppm |
| NO | 0 ppm |
| NH₃ | 0 ppm |
| H₂O | 20% |
| N₂ | Balance |

### [Example 16: Honeycomb Catalyst O]

### (Preparation of First Catalyst Powder (3))

100 g of an amorphous silica powder was added to an aqueous solution of cerium nitrate hexahydrate (Ce(NO₃)₃·6H₂O) and chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (3) in which 0.5% by mass of cerium and 0.05% by mass of platinum were carried on the amorphous silica powder.

2 parts by mass of the first catalyst powder (3) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst O. The amount of the platinum contained in the catalyst of the honeycomb catalyst O was 10 ppm. An NH₃ concentration, an NO_{X} concentration, and an N₂O concentration were measured at a reactor outlet in the same manner as in Example 15. Table 5 shows the results.

### [Example 17: Honeycomb Catalyst P]

### (Preparation of First Catalyst Powder (4))

100 g of an amorphous silica powder was added to an aqueous solution of cerium nitrate hexahydrate (Ce(NO₃)₃·6H₂O) and chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (4) in which 3% by mass of cerium and 0.05% by mass of platinum were carried on the amorphous silica powder.

2 parts by mass of the first catalyst powder (4) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst P. The amount of the platinum contained in the catalyst of the honeycomb catalyst P was 10 ppm. An NH₃ concentration, an NO_{X} concentration, and an N₂O concentration were measured at a reactor outlet in the same manner as in Example 15. Table 5 shows the results.

### [Example 18: Honeycomb Catalyst A]

Regarding the honeycomb catalyst A, an NH₃ concentration, an NO_{X} concentration, and an N₂O concentration were measured at a reactor outlet in the same manner as in Example 15. Table 5 shows the results.

### [Table 5]

**Table 5**

| | | NH₃ Decomposition Rate [%] | | | | Denitration Rate [%] | | | | N₂O Concentration at Outlet [ppm] | | | |
|---|---|---|---|---|---|---|---|---|---|---|---|---|---|
| | Temperature [°C] | 359 | 415 | 467 | 500 | 359 | 415 | 467 | 500 | 359 | 415 | 467 | 500 |
| Honeycomb Catalyst A | Evaluation (3) | 96 | 99 | 100 | 100 | 95 | 97 | 97 | 97 | 112 | 8 | 2 | 0 |
| | Evaluation (4) | 15 | 47 | 82 | 89 | 92 | 97 | 98 | 97 | 172 | 46 | 4 | 1 |
| Honeycomb Catalyst N | Evaluation (3) | 98 | 100 | 100 | 100 | 97 | 98 | 94 | 91 | 78 | 5 | 2 | 2 |
| | Evaluation (4) | 33 | 99 | 100 | 100 | 92 | 98 | 97 | 95 | 323 | 5 | 1 | 1 |
| Honeycomb Catalyst O | Evaluation (3) | 99 | 100 | 100 | 100 | 97 | 98 | 95 | 93 | 52 | 6 | 2 | 1 |
| | Evaluation (4) | 30 | 95 | 98 | 98 | 92 | 97 | 97 | 97 | 277 | 7 | 2 | 1 |
| Honeycomb Catalyst P | Evaluation (3) | 7 | 10 | 26 | 42 | 96 | 99 | 99 | 98 | 103 | 58 | 13 | 6 |

As shown in Table 5, the honeycomb catalyst bodies N and O have a higher NH₃ decomposition rate than the honeycomb catalyst A in the evaluations (3) and (4) under conditions of an ammonia concentration of 20,000 ppm and an NO concentration of 3,000 ppm. Since the honeycomb catalyst P had a low NH₃ decomposition rate in the evaluation (3), the evaluation (4) was not performed. Therefore, an improvement in durability is expected by addition of cerium, and there is an optimum value for the amount of cerium to be added.

### [Example 19: Honeycomb Catalyst Q]

### (Preparation of First Catalyst Powder (5))

100 g of an amorphous silica powder was added to an aqueous solution of cerium nitrate hexahydrate (Ce(NO₃)₃·6H₂O) and chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (5) in which 1.25% by mass of cerium and 0.25% by mass of platinum were carried on the amorphous silica powder.

2 parts by mass of the first catalyst powder (5) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst Q. The amount of the platinum contained in the catalyst of the honeycomb catalyst Q was 50 ppm.

### (Evaluation (5) of Catalyst)

The honeycomb catalyst Q was fitted and fixed in a tubular reactor. A simulant gas E containing the components shown in Table 6 was allowed to flow in the tubular reactor at AV = 13 Nm/hr (AV = gas amount/geometric surface area of honeycomb catalyst), and the temperature of the tubular reactor was set to 350°C, 400°C, 450°C, or 500°C. An NH₃ concentration, an NO_{X} concentration, and an N₂O concentration were measured at a reactor outlet. Table 7 shows the results.

### [Table 6]

**Table 6**

| Gas Kind | Concentration |
|---|---|
| O₂ | 20% |
| SO₂ | 20 ppm |
| N₂O | 100 ppm |
| NO | 5000 ppm |
| NH₃ | 8000 ppm |
| H₂O | 20% |
| N₂ | Balance |

### (Evaluation (6) of Catalyst)

The honeycomb catalyst N was fitted and fixed in a tubular reactor. A simulant gas D containing the components shown in Table 4 was allowed to flow in the tubular reactor at AV = 13 Nm/hr (AV = gas amount/geometric surface area of honeycomb catalyst), the temperature of the tubular reactor was set to 530°C, and the tubular reactor was left for 70 hours (hydrothermal aging). Then, a simulant gas E containing the components shown in Table 6 was allowed to flow in the tubular reactor at AV = 13 Nm/hr (AV = gas amount/geometric surface area of honeycomb catalyst), and the temperature of the tubular reactor was set to 350°C, 400°C, 450°C, or 500°C. An NH₃ concentration, an NO_{X} concentration, and an N₂O concentration were measured at a reactor outlet. Table 7 shows the results.

### [Example 20: Honeycomb Catalyst R]

### (Preparation of First Catalyst Powder (6))

100 g of an amorphous silica powder was added to an aqueous solution of cerium nitrate hexahydrate (Ce(NO₃)₃·6H₂O) and chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (6) in which 2.5% by mass of cerium and 0.5% by mass of platinum were carried on the amorphous silica powder.

2 parts by mass of the first catalyst powder (6) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst R. The amount of the platinum contained in the catalyst of the honeycomb catalyst R was 100 ppm. An NH₃ concentration, an NO_{X} concentration, and an N₂O concentration were measured at a reactor outlet in the same manner as in Example 19. Table 7 shows the results.

### [Example 21: Honeycomb Catalyst S]

A honeycomb catalyst S was obtained in the same manner as in Example 15, except that the amorphous silica powder was changed to a titania powder (anatase-type TiO₂, specific surface area = 65.8 m²/g, 50% particle diameter = 0.024 µm, TiO₂ = 97.3%, SO₄ = 2.43%, Na₂O = 0.003%). The amount of the platinum contained in the catalyst of the honeycomb catalyst S was 10 ppm. An NH₃ concentration, an NO_{X} concentration, and an N₂O concentration were measured at a reactor outlet in the same manner as in Example 19. Table 7 shows the results.

### [Example 22: Honeycomb Catalyst T]

A honeycomb catalyst T was obtained in the same manner as in Example 19, except that the amorphous silica powder was changed to a titania powder (anatase-type TiO₂, specific surface area = 65.8 m²/g, 50% particle diameter = 0.024 µm, TiO₂ = 97.3%, SO₄ = 2.43%, Na₂O = 0.003%). The amount of the platinum contained in the catalyst of the honeycomb catalyst T was 50 ppm. An NH₃ concentration, an NO_{X} concentration, and an N₂O concentration were measured at a reactor outlet in the same manner as in Example 19. Table 7 shows the results.

### [Example 23: Honeycomb Catalyst U]

A honeycomb catalyst U was obtained in the same manner as in Example 20, except that the amorphous silica powder was changed to a titania powder (anatase-type TiO₂, specific surface area = 65.8 m²/g, 50% particle diameter = 0.024 µm, TiO₂ = 97.3%, SO₄ = 2.43%, Na₂O = 0.003%). The amount of the platinum contained in the catalyst of the honeycomb catalyst U was 100 ppm. An NH₃ concentration, an NO_{X} concentration, and an N₂O concentration were measured at a reactor outlet in the same manner as in Example 19. Table 7 shows the results.

### [Example 24: Honeycomb Catalyst N]

Regarding the honeycomb catalyst N, an NH₃ concentration, an NO_{X} concentration, and an N₂O concentration were measured at a reactor outlet in the same manner as in Example 19. Table 7 shows the results.

### [Example 25: Honeycomb Catalyst V]

A honeycomb catalyst V was obtained in the same manner as in Example 20, except that the amorphous silica powder was changed to a silica titania powder (a powder of a composite oxide formed of titanium dioxide and silicon dioxide (main component: titanium dioxide), GX-550, manufactured by Tronox Limited). The amount of the platinum contained in the catalyst of the honeycomb catalyst V was 100 ppm. An NH₃ concentration, an NO_{X} concentration, and an N₂O concentration were measured at a reactor outlet in the same manner as in Example 19. Table 7 shows the results.

### [Example 26: Honeycomb Catalyst W]

110 g of cerium(III) nitrate hexahydrate (Ce(NO₃)₃·6H₂O), 385 g of ammonium metatungstate, and 55 g of an oxalic acid were dissolved in 700 g of water. The aqueous solution was poured to a mixed powder of 715 g of an anatase-type TiO₂ having a specific surface area of 300 m²/g or more and 385 g of an anatase-type TiO₂ having a specific surface area of 90 m²/g or less, and kneaded for 1 hour or longer. The obtained kneaded material was granulated. The granules were dried at 120°C for 4 hours. The dried product was sintered in the air at 500°C for 2 hours. The obtained sintered product was pulverized to obtain a titania-containing catalyst support (a powder containing titania, an oxide of tungsten, and an oxide of cerium).

A honeycomb catalyst W was obtained in the same manner as in Example 20, except that the amorphous silica powder was changed to a titania-containing catalyst support (a powder containing titania, an oxide of tungsten, and an oxide of cerium). The amount of the platinum contained in the catalyst of the honeycomb catalyst W was 100 ppm. An NH₃ concentration, an NO_{X} concentration, and an N₂O concentration were measured at a reactor outlet in the same manner as in Example 19. Table 7 shows the results.

### [Example 27: Honeycomb Catalyst X]

### (Preparation of First Catalyst Powder (7))

100 g of a silica titania powder was added to an aqueous solution of cerium nitrate hexahydrate (Ce(NO₃)₃·6H₂O) and chloroplatinic acid hexahydrate (H₂PtCl₆·6H₂O) and mixed therewith, and then the mixture was evaporated to dryness on a sand bath. The dried and solidified product was sintered in the air at 500°C for 2 hours. The obtained sintered product was pulverized to obtain a first catalyst powder (7) in which 5.0% by mass of cerium and 1.0% by mass of platinum were carried on the silica titania powder.

2 parts by mass of the first catalyst powder (7) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 550°C for 2 hours to obtain a honeycomb catalyst X. The amount of the platinum contained in the catalyst of the honeycomb catalyst X was 200 ppm. An NH₃ concentration, an NO_{X} concentration, and an N₂O concentration were measured at a reactor outlet in the same manner as in Example 19. Table 7 shows the results.

### [Example 28: Honeycomb Catalyst Y]

### (Preparation of Second Catalyst Powder (2))

A 0.1 N(normality) sodium hydroxide solution was added to 2,000 ml of an aqueous solution containing 9.1 g of iron(II) sulfate heptahydrate (FeSO₄·7H₂O) to adjust the pH to about 6, and then the mixture was heated to 80°C. 60 g of a BEA-type zeolite powder (SiO₂/Al₂O₃ ratio = 25) was poured thereinto, and in a state in which the temperature was kept at 80°C, the mixture was stirred for 2 hours to obtain a slurry. The slurry was dehydrated using a suction funnel to which filter paper (No. 5C) was attached. Pure water was poured to clean the cake on the filter paper. The cleaned cake was dried at 110°C for 12 hours. The dried cake was put into a furnace, and the temperature was increased at 100°C/h to sinter the cake at 500°C for 5 hours. The sintered product was pulverized to obtain a second catalyst powder (2) in which the zeolite was ion-exchanged with Fe ions.

2 parts by mass of the first catalyst powder (7) and 98 parts by mass of the second catalyst powder (2) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst Y. The amount of the platinum contained in the catalyst of the honeycomb catalyst Y was 200 ppm. An NH₃ concentration, an NO_{X} concentration, and an N₂O concentration were measured at a reactor outlet in the same manner as in Example 19. Table 7 shows the results.

### [Example 29: Honeycomb Catalyst Z]

### (Preparation of Second Catalyst Powder (3))

60 g of a BEA-type zeolite powder (SiO₂/Al₂O₃ ratio = 12) synthesized without using an organic structure-directing agent (OSDA) was poured into 2,000 ml of an aqueous solution containing 26.6 g of iron(III) sulfate nonahydrate (Fe(NO₃)₃·9H₂O) heated to 80°C. Next, in a state in which the temperature was kept at 80°C, the mixture was stirred for 2 hours to obtain a slurry. The slurry was dehydrated using a suction funnel to which filter paper (No. 5C) was attached. Pure water was poured to clean the cake on the filter paper. The cleaned cake was dried at 110°C for 12 hours. The dried cake was put into a furnace, and the temperature was increased at 100°C/h to sinter the cake at 600°C for 5 hours. The sintered product was pulverized to obtain a second catalyst powder (3) in which the zeolite was ion-exchanged with Fe ions.

2 parts by mass of the first catalyst powder (7) and 98 parts by mass of the second catalyst powder (3) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst Z. The amount of the platinum contained in the catalyst of the honeycomb catalyst Z was 200 ppm. An NH₃ concentration, an NO_{X} concentration, and an N₂O concentration were measured at a reactor outlet in the same manner as in Example 19. Table 7 shows the results.

### [Example 30: Honeycomb Catalyst AA]

### (Preparation of First Catalyst Powder (8))

100 g of a silica titania powder was added to an aqueous solution containing cerium nitrate hexahydrate (Ce(NO₃)₃·6H₂O), chloroplatinic acid hexahydrate (H₂PtCl₆·6H₂O), and iridium nitrate and mixed therewith, and then the mixture was evaporated to dryness on a sand bath. The dried and solidified product was sintered in the air at 500°C for 2 hours. The obtained sintered product was pulverized to obtain a first catalyst powder (8) in which 2.5% by mass of cerium, 0.5% by mass of platinum, and 0.25% by mass of iridium were carried on the silica titania powder.

2 parts by mass of the first catalyst powder (8) and 98 parts by mass of the second catalyst powder (1) were added to pure water to obtain a slurry. The slurry was applied to a honeycomb substrate (having such an outer diameter that an outer surface of the honeycomb catalyst is in contact with an inner surface of a pipe wall of a tubular reactor) at a coating amount of 140 g/m². The slurry was dried at 120°C for 2 hours. Next, the resulting material was sintered at 500°C for 2 hours to obtain a honeycomb catalyst AA. The amount of the platinum contained in the catalyst of the honeycomb catalyst AA was 100 ppm. An NH₃ concentration, an NO_{X} concentration, and an N₂O concentration were measured at a reactor outlet in the same manner as in Example 19. Table 7 shows the results.

### [Table 7]

**Table 7**

| | | NH₃ Decomposition Rate [%] | | | | Denitration Rate [%] | | | | N₂O Concentration at Outlet [ppm] | | | |
|---|---|---|---|---|---|---|---|---|---|---|---|---|---|
| | Temperature [°C] | 350 | 400 | 450 | 500 | 350 | 400 | 450 | 500 | 350 | 400 | 450 | 500 |
| Honeycomb Catalyst N | Evaluation (5) | 91 | 100 | 100 | 100 | 95 | 94 | 88 | 78 | 228 | 44 | 15 | 6 |
| | Evaluation (6) | 70 | 100 | 100 | 100 | 90 | 96 | 92 | 83 | 264 | 37 | 13 | 6 |
| Honeycomb Catalyst Q | Evaluation (5) | 100 | 100 | 100 | 100 | 94 | 75 | 58 | 49 | 364 | 123 | 39 | 10 |
| | Evaluation (6) | 79 | 99 | 100 | 100 | 94 | 98 | 89 | 80 | 216 | 27 | 11 | 4 |
| Honeycomb Catalyst R | Evaluation (5) | 100 | 100 | 100 | 100 | 94 | 76 | 60 | 41 | 375 | 151 | 50 | 13 |
| | Evaluation (6) | 100 | 100 | 100 | 100 | 93 | 80 | 67 | 53 | 368 | 131 | 43 | 11 |
| Honeycomb Catalyst S | Evaluation (5) | 92 | 98 | 100 | 100 | 100 | 100 | 100 | 99 | 131 | 17 | 4 | 2 |
| | Evaluation (6) | 69 | 84 | 93 | 96 | 100 | 100 | 100 | 99 | 114 | 17 | 2 | 1 |
| Honeycomb Catalyst T | Evaluation (5) | 99 | 100 | 100 | 100 | 97 | 94 | 89 | 84 | 267 | 61 | 17 | 5 |
| | Evaluation (6) | 80 | 95 | 100 | 100 | 94 | 99 | 98 | 93 | 196 | 20 | 5 | 3 |
| Honeycomb Catalyst U | Evaluation (5) | 99 | 100 | 100 | 100 | 97 | 92 | 82 | 74 | 333 | 90 | 27 | 7 |
| | Evaluation (6) | 97 | 100 | 100 | 100 | 97 | 97 | 93 | 87 | 283 | 44 | 12 | 5 |
| Honeycomb Catalyst V | Evaluation (5) | 100 | 100 | 100 | 100 | 97 | 93 | 88 | 79 | 350 | 81 | 21 | 7 |
| | Evaluation (6) | 97 | 100 | 100 | 100 | 97 | 97 | 93 | 84 | 275 | 50 | 16 | 5 |
| Honeycomb Catalyst W | Evaluation (5) | 100 | 100 | 100 | 100 | 97 | 94 | 90 | 84 | 352 | 85 | 22 | 6 |
| | Evaluation (6) | 95 | 99 | 100 | 100 | 97 | 99 | 98 | 95 | 242 | 34 | 9 | 3 |
| Honeycomb Catalyst X | Evaluation (5) | 100 | 100 | 100 | 100 | 82 | 83 | 78 | 69 | 382 | 131 | 38 | 11 |
| | Evaluation (6) | 100 | 100 | 100 | 100 | 90 | 86 | 72 | 59 | 381 | 111 | 36 | 11 |
| Honeycomb Catalyst Y | Evaluation (5) | 100 | 100 | 100 | 100 | 83 | 80 | 74 | 65 | 414 | 146 | 38 | 8 |
| | Evaluation (6) | 100 | 100 | 100 | 100 | 87 | 82 | 66 | 52 | 473 | 146 | 45 | 12 |
| Honeycomb Catalyst Z | Evaluation (5) | 100 | 100 | 100 | 100 | 83 | 88 | 81 | 76 | 349 | 126 | 24 | 3 |
| | Evaluation (6) | 100 | 100 | 100 | 100 | 93 | 90 | 79 | 68 | 308 | 69 | 19 | 4 |
| Honeycomb Catalyst AA | Evaluation (5) | 99 | 100 | 100 | 100 | 98 | 94 | 94 | 89 | 306 | 68 | 12 | 4 |
| | Evaluation (6) | 93 | 100 | 100 | 100 | 95 | 96 | 96 | 90 | 346 | 64 | 10 | 4 |

As shown in Table 7, when comparing the honeycomb catalyst bodies N, Q, and R, the honeycomb catalyst bodies S, T, and U, or the honeycomb catalyst bodies V and X, as the amounts of platinum and cerium carried increase, the NH₃ decomposition rate is improved, the denitration rate slightly decreases, the N₂O concentration at the outlet slightly increases, and the influence of hydrothermal aging on the NH₃ decomposition rate decreases in the evaluations (5) and (6) under conditions of an ammonia concentration of 8,000 ppm and an NO concentration of 5,000 ppm. In addition, in the evaluations (5) and (6), the honeycomb catalyst bodies S, T, and U using the titania-containing catalyst support or the honeycomb catalyst V using the silica titania-containing catalyst support have a slightly lower or substantially the same NH₃ decomposition rate, a higher denitration rate, and a lower N₂O concentration at the outlet as compared to the honeycomb catalyst bodies N, Q, and R using the silica-containing catalyst support. In addition, as shown in Table 7, the honeycomb catalyst bodies V and W are substantially the same as the honeycomb catalyst U in the evaluations (5) and (6).

The honeycomb catalyst Y obtained by adjusting the pH during ion exchange to about 6 and the honeycomb catalyst Z obtained by performing calcinating at 600°C using OSDA-free zeolite have a higher denitration rate at 350°C in the evaluation (6) after hydrothermal aging than in the evaluation (5) before hydrothermal aging. The honeycomb catalyst AA containing iridium has a higher denitration rate than the honeycomb catalyst V.

As shown in the above results, the catalyst according to the present invention can promote a reaction of decomposing NH₃, NO_{X}, and N₂O in an exhaust gas containing NH₃, NOx, and N₂O at a high efficiency, can suppress the discharge of NOx and N₂O generated as by-products by an NH₃ oxidation reaction, does not deteriorate by SO₂ which may be contained in a combustion exhaust gas, and has excellent high temperature resistance.

### Reference Signs List

A: NH₃-containing gas
B: O₂-containing gas
C: reducing agent (ammonia or urea)
D: cooling air
2: gas inflow pipe
3: heat exchanger bypass pipe
5: mixer
9: heat exchanger
10h: heater
10c, 10c₂: cooler
11, 11a, 11b: reactor
12, 12a, 12b: catalyst layer
13: treated gas
14: measurement equipment (thermometer/concentration meter)
17: control device

## Claims

1. A catalyst for promoting an ammonia decomposition reaction, the catalyst comprising: a mixture of
a first catalyst powder including a catalyst support containing at least one selected from the group consisting of ceria, silica, alumina, titania, zirconia, and zeolite and a noble metal carried on the catalyst support, and
a second catalyst powder including a product obtained by ion exchange of at least one ion selected from the group consisting of Fe ions, Ce ions, Co ions, and Cu ions with zeolite.

2. The catalyst according to Claim 1,
wherein the first catalyst powder includes a catalyst support containing silica and/or titania, and platinum and/or iridium carried on the catalyst support, and
the second catalyst powder includes a product obtained by ion exchange of Fe ions with BEA-type zeolite.

3. A catalyst for promoting an ammonia decomposition reaction, the catalyst comprising: a mixture of
a first catalyst powder including a catalyst support containing at least one selected from the group consisting of ceria, silica, alumina, titania, zirconia, and zeolite and a noble metal carried on the catalyst support,
a second catalyst powder including a product obtained by ion exchange of at least one ion selected from the group consisting of Fe ions, Ce ions, Co ions, and Cu ions with zeolite, and
a third catalyst powder including an oxide of titanium, an oxide of tungsten and/or molybdenum, and an oxide of cerium and/or vanadium.

4. The catalyst according to Claim 3,
wherein the first catalyst powder includes a catalyst support containing silica and/or titania, and platinum and/or iridium carried on the catalyst support,
the second catalyst powder includes a product obtained by ion exchange of Fe ions with BEA-type zeolite, and
the third catalyst powder includes an oxide of titanium, an oxide of tungsten, and an oxide of cerium.

5. A method for reducing poisonous gas components to be treated, the method comprising: performing, in a presence of the catalyst according to Claim 1,
a chemical reaction in which NH₃ contained in the gas to be treated is converted into nitrogen and water, and
a chemical reaction in which NO_{X} and N₂O contained in the gas to be treated are converted into nitrogen and water.

6. A method for reducing poisonous gas components to be treated, the method comprising: performing, in a presence of the catalyst according to Claim 3,
a chemical reaction in which NH₃ contained in the gas to be treated is converted into nitrogen and water, and
a chemical reaction in which NO_{X} and N₂O contained in the gas to be treated are converted into nitrogen and water.

7. The method according to Claim 5 or 6, further comprising:
adding at least one reducing agent selected from the group consisting of ammonia and urea to the gas to be treated.

8. The method according to Claim 7, further comprising:
adjusting an amount of the reducing agent to be added to the gas to be treated on a basis of a temperature of a treated gas and amounts of NO_{X} and N₂O contained in the treated gas.

9. The method according to Claim 5 or 6, further comprising:
cooling the gas to be treated.

10. The method according to Claim 9, further comprising:
adjusting a degree of cooling the gas to be treated on a basis of a temperature of a treated gas.
